# EUROPEAN PATENT APPLICATION

(11) **EP 2 838 008 A2**
(43) Date of publication of application: **18.02.2015**
(21) Application number: 14002654.3
(22) Date of filing: 30.07.2014
(51) Int. Cl.: G06F 3/0488

(54) **Mobile terminal and method of controlling the mobile terminal**

(30) Priority: 16.08.2013 KR 20130097296
(71) Applicant: LG Electronics, Inc., Seoul 150-721 (KR)
(72) Inventor: Kim, Jongchul, 137-893 Seoul (KR); Ahn, Sohyun, 137-893 Seoul (KR); Lee, Jangsung, 137-893 Seoul (KR)
(74) Representative: Beyer, Andreas

(57) **Abstract**

A mobile terminal including a main body configured to be worn on a wrist; a display unit configured to display a lock screen indicating a locking mode of the mobile terminal, said lock screen including a clock having a minute hand and an hour hand connected at a central control point and having time identifications indicating a time of day surrounding the central control point; and a controller configured to receive a touch input on the central control point and at least first and second time identifications to set a range of time, unlock the mobile terminal based on the received touch input, and display information corresponding to the set range of time.

## Description

### CROSS-REFERENCE TO A RELATED APPLICATION

### BACKGROUND OF THE INVENTION

### 1. Field of the Invention

The present invention relates to a mobile terminal that surrounds a wrist.

### 2. Background of the Invention

A terminal is broadly categorized by mobility into a mobile terminal and a stationary terminal. The mobile terminal is further categorized by portability into a handheld terminal and a vehicle-mounted terminal.

In response to an increasing demand for diversified functions, the terminal has been realized in the form of a multimedia player with multiple functions such as shooting a photographic object as a still image or moving images, reproducing digital audio and video compression files, playing a game, receiving a broadcast or the like. Furthermore, structural and software modifications to the mobile terminal are considered for supporting and improving functions of the mobile terminal.

With the introduction of the improvements, the recent mobile terminals have evolved into various types of designs and wrist watch-type mobile terminals have been developed that are fixed to a user' body. The wrist watch-type mobile terminal also usually needs to output a locking screen to a display unit thereof in a lock mode to prevent an unintended touch input. The wrist watch-type mobile terminal also cancels the locking mode when a touch input is applied to the display unit to perform functions.

Further, a problem with the wrist watch-type mobile terminal is terminal needs to display information that alerts a user to a time on the locked screen and it is difficult to ensure space for displaying other pieces of information in a locked state.

### SUMMARY OF THE INVENTION

Therefore, an aspect of the detailed description is to provide a mobile terminal that is capable of performing functions more conveniently using a locking screen on which a time is displayed.

To achieve these and other advantages and in accordance with the purpose of this specification, as embodied and broadly described herein, there is provided a mobile terminal including: a main body that is formed in a manner that can be fixed to a user's wrist; a display unit on which to output a locking screen that is configured from at least two pointing hands that move to indicate numbers corresponding to a time and the time in a locking mode in which one or more among functions are limited; and a controller that cancels the locking mode, based on a touch input applied to a predetermined region of the locking screen and that controls the display unit so screen information is output at the time that is selected with the touch input.

In the mobile terminal, the locking screen may include a control point that is formed in a region connecting end portions of the two pointing hands and receives a user's control command, and the controller may select the time, based on a continuous touch input applied to a first control hand that is formed based on the control command, and the screen information based on the touch input applied to the first control hand may include an input window for inputting data relating to the selected time.

In the mobile terminal, the controller may define as a starting time a number that the first control hand points to at a point in time at which a control hand having a predetermined length is formed, and may define as an ending time a number that the first control hand points to at a point in time at which the touch input applied to the first control hand is released.

In the mobile terminal, the controller may form a second control hand different from the first control hand, based on the control command, and may select the time, based on the continuous touch input applied to the second control hand, and the screen information that is output based on the touch input applied to the second control hand may include already-stored data.

In the mobile terminal, the screen information may include a number group and a divisional image that is formed in a manner that correspond to the number group according to time information included in the data.

The mobile terminal may further include a sensing unit that is mounted in the main body and senses whether or not the user is close to the main body, and when it is sensed that the user is positioned close to the main body, the controller may further output detailed information included in the data.

The mobile terminal may further include an application for recording data corresponding to the time and a memory in which to store the data, and when the touch input applied to the second control hand is released, the controller may execute the application.

In the mobile terminal, the screen information may include a date input window for inputting a date, and the controller may search the memory for already-stored data including a date that is input by the user and a time that is selected by the second control hand.

In the mobile terminal, the controller may change the date, based on the touch input applied to at least one among the pointing hands.

In the mobile terminal, the second control hand may be output to the display unit in a manner that points sequentially to the numbers with the continuous touch input, and when the second control hand points to a number corresponding to a time included in data stored in the memory, the controller may output an alert notification.

In the mobile terminal, a number group may include numbers from 1 to 12 indicating morning or numbers from 13 to 24 indicating afternoon, and when the touch input applied to the first control hand or a second hand is received on one region of the display unit to which the number 12 or 24 in the number group is output, the controller may control the display unit so switching to a number indicating the morning or the afternoon takes place and the number is output.

In the mobile terminal, when the first control hand or a second control hand is formed, the controller may output different alert notifications.

In the mobile terminal, based on a long touch input applied to the second control hand, at least one divisional image on which to display data including time information that relates to twelve hours starting from a point in time that the second control hand points to may be output to the display unit.

In the mobile terminal, if multiple pieces of data corresponding to the selected time are stored in the memory, the controller may control the display unit so multiple divisional images, distinguished from one another, on each of which each piece of data is displayed. In the mobile terminal, the data may be stored in the memory, along with information on importance of the data, and the controller may control the display unit so the multiple divisional images that are distinguished from one another based on the information on the importance are output.

In the mobile terminal, the locking screen may further include a functional hand for performing a predetermined function, and the controller may select the time according to a movement of the function hand that is based on the touch input.

In the mobile terminal, when a continuous touch input is applied to an end portion of the functional hand, the controller may control the display unit so the function hand that is formed to receive the touch input and perform another function and is changed in length is output.

In the mobile terminal, in the locking mode, based on a predetermined control command, the controller may match at least one function to at least one number among the numbers, and based on the touch input applied to a region close to the number that is matched to the control command, and the controller may cancel the locking mode and performs the function.

In the mobile terminal, the function may correspond to an application, and each number is changed to an icon for each application according to the control command on the display unit. In the mobile terminal, the control command may correspond to an event that is received in the mobile terminal and the function may correspond to information relating to the event, and the controller may switch a number corresponding to the number of the events to a graphic image or may further displays the graphic image adjacent to the number.

In the mobile terminal, when multiple events having different attributes, which are the same in number, are received, the controller may control the display unit so the graphic images which correspond to the multiple events, respectively, are alternately output or the graphic images are output together.

In the mobile terminal, when the event is received, the controller may transform at least one among the pointing hands in a manner that corresponds to the graphic image, and based on the touch input applied to the pointing hand in the changed shape, the controller may control the display unit so information relating to the event is output.

To achieve these and other advantages and in accordance with the purpose of this specification, as embodied and broadly described herein, there is provided a method of controlling a mobile terminal, including: outputting a locking screen configured from at least two pointing hands that move to indicate numbers corresponding to a time and the time in a locking mode, in which one or more among functions are limited; canceling the locking mode based on a touch input applied to a predetermined region; and selecting the time based on the touch input and outputting screen information relating to the selected time.

According to an embodiment of the present invention, with the touch input applied to the locking screen on which the time is displayed and which limits the user's touch input, the locking mode is released and at the same time, the function of inputting the data corresponding to the defined time is performed.

Accordingly, the user can perform a different function more conveniently, using the locking screen that alerts the user to the time.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate embodiments and together with the description serve to explain the principles of the invention.

In the drawings:
FIG. 1 is a block diagram illustrating a mobile terminal according to one embodiment of the present invention;
FIGS. 2A and 2B are diagrams, each illustrating a communication system in which the mobile terminal according to an embodiment of the present invention can operate;
FIG. 3A is a front perspective diagram illustrating the mobile terminal according to one embodiment of the present invention;
FIG. 3B is a rear perspective diagram of the mobile terminal illustrated in FIG. 3A;
FIG. 4 is a flowchart illustrating a method of controlling the mobile terminal according to one embodiment of the present invention;
FIGS. 5A is a diagram illustrating the method according to one embodiment in FIG. 4;
FIGS. 5B is a diagram illustrating a method of outputting already-stored data using a locking screen;
FIG. 5C is a diagram illustrating a method of displaying a mode switch according to a length of a control hand;
FIGS. 6A, 6B, 6C, 6D and 6E are diagrams illustrating a method of outputting the already-stored data using the locking screen;
FIGS. 7A, 7B and 7C are diagrams illustrating a method of controlling the locking screen using the control hand according to another embodiment;
FIGS. 8A, 8B, 8C, 8D, 8E and 8F are diagrams illustrating a method of providing an alert notification that alerts the user to an event that is received;
FIG. 9 is a diagram illustrating a method of immediately performing an application using a number group on the locking screen;
FIGS. 10A, 10B, 10C, 10D, and 10E are diagrams illustrating a method of controlling the mobile terminal using a functional hand included in a locking screen;
FIG. 11 is a diagram illustrating a method of displaying switching of the functional hand and the control hand; and
FIGS. 12A and 12B are diagrams illustrating a method of outputting different pieces of screen information using a proximity sensor.

### DETAILED DESCRIPTION OF THE INVENTION

Hereinafter, the present invention will be explained in more detail with reference to the attached drawings. For the sake of brief description with reference to the drawings, the same or equivalent components will be provided with the same reference numbers, and description thereof will not be repeated. The suffixes "module" and "unit or portion" for components used in the following description merely provided only for facilitation of preparing this specification, and thus they are not granted a specific meaning or function.

Furthermore, it should also be understood that embodiments are not limited by any of the details of the foregoing description, but rather should be construed broadly within its spirit and scope and it is intended that the present invention cover modifications and variations of this invention provided they come within the scope of the appended claims and their equivalents.

A terminal in the present description may include a mobile terminal such as a portable phone, a smart phone, a notebook computer, a digital broadcasting terminal, Personal Digital Assistants (PDA), Portable Multimedia Player (PMP), a navigation system, a slate PC, a tablet PC and an ultra book. However, it will be obvious to those skilled in the art that the present invention may be also applicable to a fixed terminal such as a digital TV and a desktop computer, except for specific configurations for mobility.

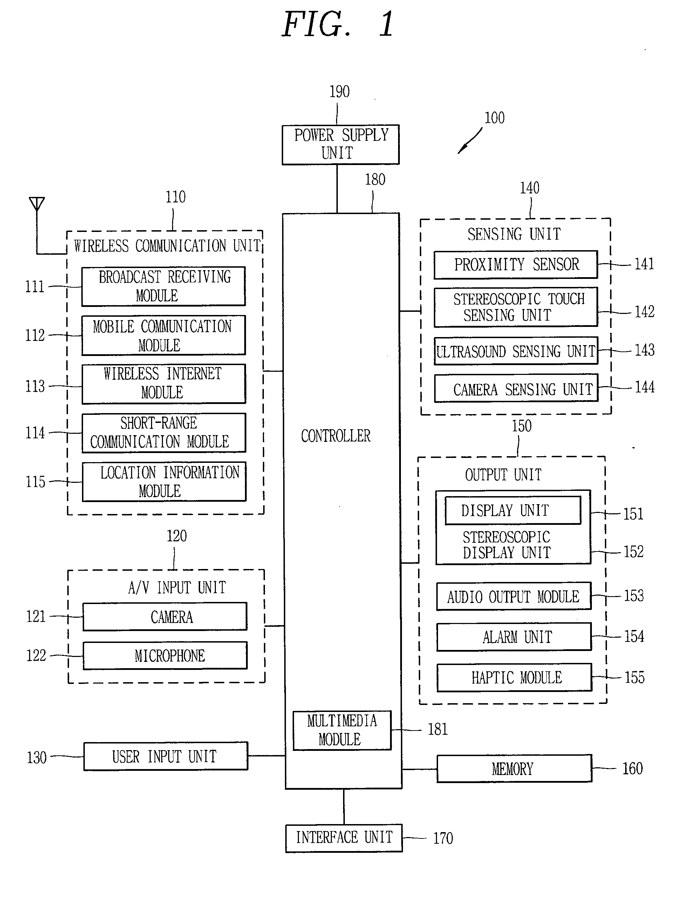

FIG. 1 is a diagram illustrating a mobile terminal according to one embodiment of the present invention. The mobile terminal 100 may include components, such as a wireless communication unit 110, an Audio/Video (A/V) input unit 120, a user input unit 130, a sensing unit 140, an output unit 150, a memory 160, an interface unit 170, a controller 180, a power supply 190 and the like. FIG. 1 shows the mobile terminal 100 having various components, but implementing all of the illustrated components is not a requirement. Greater or fewer components may alternatively be implemented.

Hereinafter, each component 110 to 190 is described in sequence.

The wireless communication unit 110 may typically include one or more modules which permit wireless communications between the mobile terminal 100 and a wireless communication system or between the mobile terminal 100 and a network within which the mobile terminal 100 is located. For example, the wireless communication unit 110 may include at least one of a broadcast receiving module 111, a mobile communication module 112, a wireless Internet module 113, a short-range communication module 114, a location information module 115 and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. The broadcast receiving module 111 may be configured to be suitable for every broadcast system transmitting broadcast signals as well as the digital broadcasting systems. Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video (telephony) call signal, or various formats of data according to transmission/reception of text/multimedia messages.

The mobile communication module 112 may implement a video call mode and a voice call mode. The video call mode indicates a state of calling with watching a callee's image. The voice call mode indicates a state of calling without watching the callee's image. The wireless communication module 112 may transmit and receive at least one of voice and image in order to implement the video call mode and the voice call mode.

The wireless Internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), Worldwide Interoperability for Microwave Access (Wimax), High Speed Downlink Packet Access (HSDPA) and the like.

The short-range communication module 114 denotes a module for short-range communications. Suitable technologies for implementing this module may include BLUETOOTH^{™}, Radio Frequency IDentification (RFID), Infrared Data Association (IrDA), Ultra-WideBand (UWB), ZigBee^{™}, Near Field Communication (NFC) and the like.

The location information module 115 denotes a module for detecting or calculating a position of a mobile terminal. An example of the location information module 115 may include a Global Position System (GPS) module or a wireless fidelity (Wi-Fi) module.

Still referring to FIG. 1, the A/V input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display unit 151.

The image frames processed by the camera 121 may be stored in the memory 160 or transmitted to the exterior via the wireless communication unit 110. Also, user's position information and the like may be calculated from the image frames acquired by the camera 121. Two or more cameras 121 may be provided according to the configuration of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 when the phone call mode. The microphone 122 may include assorted noise removing algorithms to remove noise generated in the course of receiving the external audio signal.

The user input unit 130 may generate input data input by a user to control the operation of the mobile terminal. The user input unit 130 may include a keypad, a dome switch, a touchpad (e.g., static pressure/capacitance), a jog wheel, a jog switch and the like.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device.

The output unit 150 is configured to output an audio signal, a video signal or a tactile signal. The output unit 150 may include a display unit 151, an audio output module 153, an alarm unit 154 and a haptic module 155.

The display unit 151 may output information processed in the mobile terminal 100. For example, when the mobile terminal is operating in a phone call mode, the display unit 151 will provide a User Interface (UI) or a Graphic User Interface (GUI), which includes information associated with the call. As another example, if the mobile terminal is in a video call mode or a capturing mode, the display unit 151 may additionally or alternatively display images captured and/or received, a UI, or GUI.

The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

Some of such displays 151 may be implemented as a transparent type or an optical transparent type through which the exterior is visible, which is referred to as 'transparent display'. A representative example of the transparent display may include a Transparent OLED (TOLED), and the like. The rear surface of the display unit 151 may also be implemented to be optically transparent. Under this configuration, a user can view an object positioned at a rear side of a terminal body through a region occupied by the display unit 151 of the terminal body.

The display unit 151 may be implemented in two or more in number according to a configured aspect of the mobile terminal 100. For instance, a plurality of the displays 151 may be arranged on one surface to be spaced apart from or integrated with each other, or may be arranged on different surfaces.

The display unit 151 may also be implemented as a stereoscopic display unit 152 for displaying stereoscopic images. Here, the stereoscopic image may be a three-dimensional (3D) stereoscopic image, and the 3D stereoscopic image is an image refers to an image making a viewer feel that a gradual depth and reality of an object on a monitor or a screen is the same as a reality space. A 3D stereoscopic image is implemented by using binocular disparity. Binocular disparity refers to disparity made by the positions of two eyes. When two eyes view different 2D images, the images are transferred to the brain through the retina and combined in the brain to provide the perception of depth and reality sense.

The stereoscopic display unit 152 may employ a stereoscopic display scheme such as stereoscopic scheme (a glass scheme), an auto-stereoscopic scheme (glassless scheme), a projection scheme (holographic scheme), or the like. Stereoscopic schemes commonly used for home television receivers, or the like, include Wheatstone stereoscopic scheme, or the like.

The auto-stereoscopic scheme includes, for example, a parallax barrier scheme, a lenticular scheme, an integral imaging scheme, a switchable scheme, or the like. The projection scheme includes a reflective holographic scheme, a transmissive holographic scheme, or the like.

In general, a 3D stereoscopic image is comprised of a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Also, as for a 3D thumbnail image, a left image thumbnail and a right image thumbnail are generated from a left image and a right image of the original image frame, respectively, and then combined to generate a single 3D thumbnail image. In general, thumbnail refers to a reduced image or a reduced still image. The thusly generated left image thumbnail and the right image thumbnail are displayed with a horizontal distance difference therebetween by a depth corresponding to the disparity between the left image and the right image on the screen, providing a stereoscopic space sense.

In addition, a left image and a right image required for implementing a 3D stereoscopic image is displayed on the stereoscopic display unit 152 by a stereoscopic processing unit. The stereoscopic processing unit may receive the 3D image and extract the left image and the right image, or may receive the 2D image and change it into a left image and a right image.

Here, if the display unit 151 and a touch sensitive sensor (referred to as a touch sensor) have a layered structure therebetween (referred to as a 'touch screen'), the display unit 151 may be used as an input device as well as an output device. The touch sensor may be implemented as a touch film, a touch sheet, a touchpad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals are transmitted to a touch controller. The touch controller processes the received signals, and then transmits corresponding data to the controller 180. Accordingly, the controller 180 can sense which region of the display unit 151 has been touched.

Still referring to FIG. 1, a proximity sensor 141 may be arranged at an inner region of the mobile terminal 100 covered by the touch screen, or near the touch screen. The proximity sensor 141 may be provided as one example of the sensing unit 140. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this instance, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

When a touch sensor is overlaid on the stereoscopic display unit 152 in a layered manner (hereinafter, referred to as 'stereoscopic touch screen'), or when the stereoscopic display unit 152 and a 3D sensor sensing a touch operation are combined, the stereoscopic display unit 152 may also be used as a 3D input device.

As examples of the 3D sensor, the sensing unit 140 may include a proximity sensor 141, a stereoscopic touch sensing unit 142, an ultrasonic sensing unit 143, and a camera sensing unit 144.

The proximity sensor 141 detects the distance between a sensing object (e.g., the user's finger or a stylus pen) applying a touch by using the force of electromagnetism or infrared rays without a mechanical contact and a detect surface. By using the distance, the terminal recognizes which portion of a stereoscopic image has been touched. In particular, when the touch screen is an electrostatic touch screen, the degree of proximity of the sensing object is detected based on a change of an electric field according to proximity of the sensing object, and a touch to the 3D image is recognized by using the degree of proximity.

The stereoscopic touch sensing unit 142 is configured to detect the strength or duration of a touch applied to the touch screen. For example, the stereoscopic touch sensing unit 142 may sense touch pressure. When the pressure is strong, it may recognize the touch as a touch with respect to an object located farther away from the touch screen toward the inside of the terminal.

The ultrasonic sensing unit 143 is configured to recognize position information of the sensing object by using ultrasonic waves. The ultrasonic sensing unit 143 may include, for example, an optical sensor and a plurality of ultrasonic sensors. The optical sensor is configured to sense light and the ultrasonic sensors may be configured to sense ultrasonic waves. Since light is much faster than ultrasonic waves, a time for which the light reaches the optical sensor is much shorter than a time for which the ultrasonic wave reaches the ultrasonic sensor. Therefore, a position of a wave generation source may be calculated by using a time difference from the time that the ultrasonic wave reaches based on the light as a reference signal.

The camera sensing unit 144 includes at least one of a camera 121, a photo sensor, and a laser sensor. For example, the camera 121 and the laser sensor may be combined to detect a touch of the sensing object with respect to a 3D stereoscopic image. When distance information detected by a laser sensor is added to a 2D image captured by the camera, 3D information can be obtained.

In another example, a photo sensor may be laminated on the display device. The photo sensor is configured to scan a movement of the sensing object in proximity to the touch screen. In more detail, the photo sensor includes photo diodes and transistors at rows and columns to scan content mounted on the photo sensor by using an electrical signal changing according to the quantity of applied light. Namely, the photo sensor calculates the coordinates of the sensing object according to variation of light to thus obtain position information of the sensing object.

The audio output module 153 may convert and output as sound audio data received from the wireless communication unit 110 or stored in the memory 160 in a call signal reception mode, a call mode, a record mode, a voice recognition mode, a broadcast reception mode, and the like. Also, the audio output module 153 may provide audible outputs related to a particular function performed by the mobile terminal 100 (e.g., a call signal reception sound, a message reception sound, etc.). The audio output module 153 may include a speaker, a buzzer or the like.

The alarm unit 154 outputs a signal for informing about an occurrence of an event of the mobile terminal 100. Events generated in the mobile terminal may include call signal reception, message reception, key signal inputs, a touch input etc. In addition to video or audio signals, the alarm unit 154 may output signals in a different manner, for example, using vibration to inform about an occurrence of an event. The video or audio signals may be also output via the audio output module 153, so the display unit 151 and the audio output module 153 may be classified as parts of the alarm unit 154.

A haptic module 155 generates various tactile effects the user may feel. A typical example of the tactile effects generated by the haptic module 155 is vibration. The strength and pattern of the haptic module 155 can be controlled. For example, different vibrations may be combined to be output or sequentially output.

Besides vibration, the haptic module 155 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 155 may be implemented to allow the user to feel a tactile effect through a muscle sensation such as fingers or arm of the user, as well as transferring the tactile effect through a direct contact. Two or more haptic modules 155 may be provided according to the configuration of the mobile terminal 100.

The memory 160 may store software programs used for the processing and controlling operations performed by the controller 180, or may temporarily store data (e.g., a phonebook, messages, still images, video, etc.) that are input or output. In addition, the memory 160 may store data regarding various patterns of vibrations and audio signals output when a touch is input to the touch screen.

The memory 160 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via the interface unit 170.

When the mobile terminal 100 is connected with an external cradle, the interface unit 170 may serve as a passage to allow power from the cradle to be supplied therethrough to the mobile terminal 100 or may serve as a passage to allow various command signals input by the user from the cradle to be transferred to the mobile terminal therethrough. Various command signals or power input from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 can include a multimedia module 181 for reproducing multimedia data. The multimedia module 181 may be configured within the controller 180 or may be configured to be separated from the controller 180.

The controller 180 can perform a pattern recognition processing to recognize a handwriting input or a picture drawing input performed on the touch screen as characters or images, respectively. Also, the controller 180 can execute a lock state to restrict a user from inputting control commands for applications when a state of the mobile terminal meets a preset condition. Also, the controller 180 can control a lock screen displayed in the lock state based on a touch input sensed on the display unit 151 in the lock state of the mobile terminal.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For a hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic units designed to perform the functions described herein. In some cases, such embodiments may be implemented by the controller 180 itself.

For a software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

Hereinafter, a communication system which is operable with the mobile terminal 100 according to the present invention will be described.

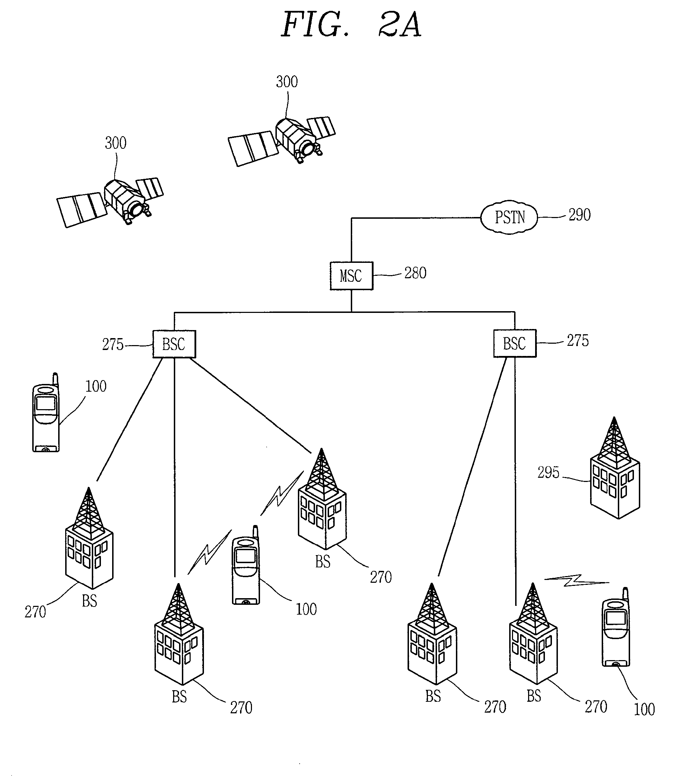

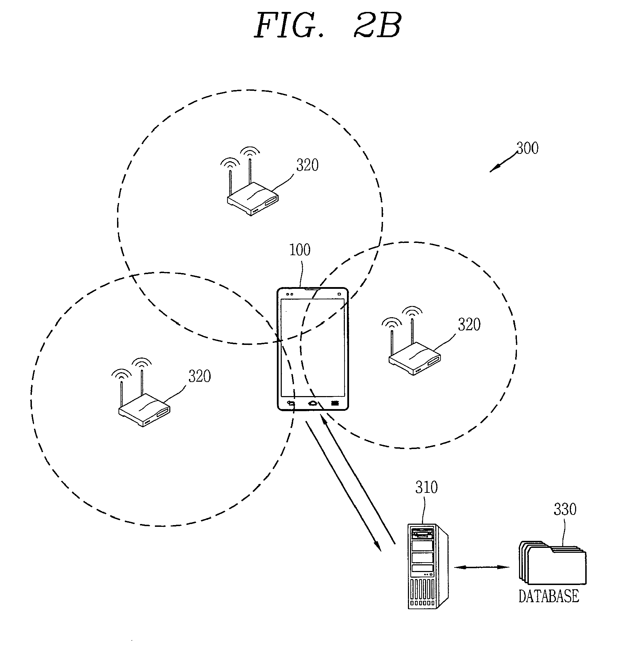

FIGS. 2A and 2B are conceptual views of a communication system operable with a mobile terminal 100 in accordance with the present invention. First, referring to FIG. 2A, such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like.

By way of non-limiting example only, further description will relate to a CDMA communication system, but such teachings apply equally to other system types including the CDMA wireless communication system.

Referring now to FIG. 2A, a CDMA wireless communication system is shown having a plurality of mobile terminals 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in FIG. 2A.

Each base station 270 may include one or more sectors, each sector having an omni-directional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in FIG. 2A, transmits a broadcast signal to the mobile terminals 100 operating within the system. The broadcast receiving module 111 (FIG. 1) is typically configured inside the mobile terminal 100 to receive broadcast signals transmitted by the BT 295.

FIG. 2A further depicts several Global Positioning System (GPS) satellites 300. Such satellites 300 facilitate locating the position of at least one of plural mobile terminals 100. Two satellites are depicted in FIG. 2A, but it is understood that useful position information may be obtained with greater or fewer satellites than two satellites. The GPS module 115 (FIG. 1) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270. The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

Hereinafter, description will be given of a method for acquiring location information of a mobile terminal using a wireless fidelity (Wi-Fi) positioning system (WPS), with reference to FIG. 2B.

The Wi-Fi positioning system (WPS) 300 refers to a location determination technology based on a wireless local area network (WLAN) using Wi-Fi as a technology for tracking the location of the mobile terminal 100 using a Wi-Fi module provided in the mobile terminal 100 and a wireless access point 320 for transmitting and receiving to and from the Wi-Fi module.

The Wi-Fi positioning system 300 may include a Wi-Fi location determination server 310, a mobile terminal 100, a wireless access point (AP) 320 connected to the mobile terminal 100, and a database 330 stored with any wireless AP information.

The Wi-Fi location determination server 310 extracts the information of the wireless AP 320 connected to the mobile terminal 100 based on a location information request message (or signal) of the mobile terminal 100. The information of the wireless AP 320 may be transmitted to the Wi-Fi location determination server 310 through the mobile terminal 100 or transmitted to the Wi-Fi location determination server 310 from the wireless AP 320.

The information of the wireless AP extracted based on the location information request message of the mobile terminal 100 may be at least one of MAC address, SSID, RSSI, channel information, privacy, network type, signal strength and noise strength.

The Wi-Fi location determination server 310 receives the information of the wireless AP 320 connected to the mobile terminal 100 as described above, and compares the received wireless AP 320 information with information contained in the pre-established database 330 to extract (or analyze) the location information of the mobile terminal 100.

Further, referring to FIG. 2B, as an example, the wireless AP connected to the mobile terminal 100 is illustrated as a first, a second, and a third wireless AP 320. However, the number of wireless APs connected to the mobile terminal 100 may be changed in various ways according to a wireless communication environment in which the mobile terminal 100 is located. When the mobile terminal 100 is connected to at least one of wireless APs, the Wi-Fi positioning system 300 can track the location of the mobile terminal 100.

Next, considering the database 330 stored with any wireless AP information in more detail, various information of any wireless APs disposed at different locations may be stored in the database 330.

The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

Thus, any wireless AP information and location information corresponding to the any wireless AP are stored together in the database 330, and thus the Wi-Fi location determination server 310 may retrieve wireless AP information corresponding to the information of the wireless AP 320 connected to the mobile terminal 100 from the database 330 to extract the location information matched to the searched wireless AP, thereby extracting the location information of the mobile terminal 100.

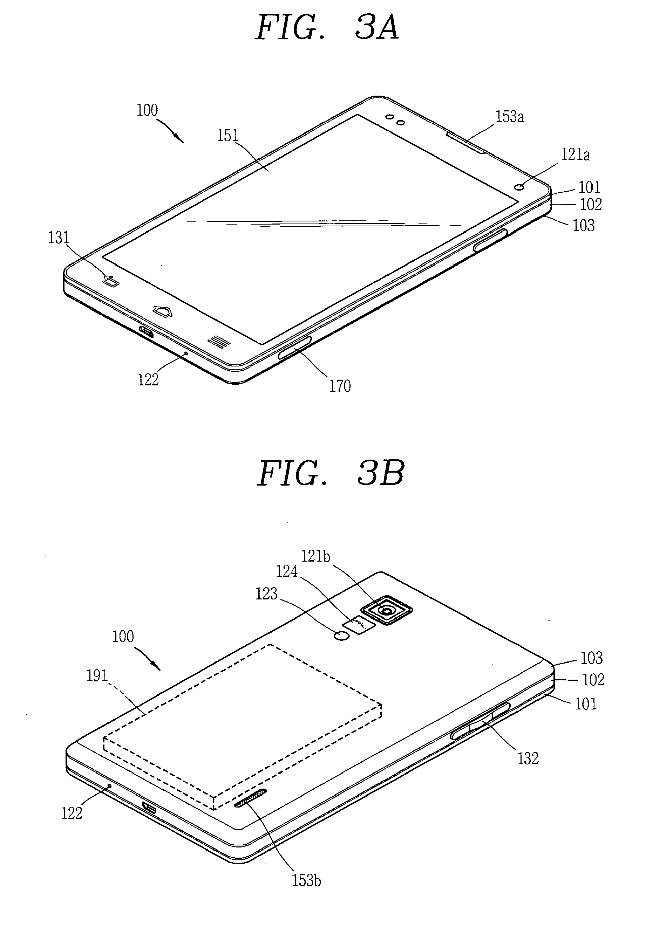

FIG. 3A is a front perspective view of the mobile terminal 100 according to an embodiment of the present invention. The mobile terminal 100 according to the present invention is a bar type mobile terminal. However, the present invention is not limited to this, but may be applied to a slide type in which two or more bodies are coupled to each other so as to perform a relative motion, a folder type, or a swing type, a swivel type and the like.

A case (casing, housing, cover, etc.) forming an outer appearance of the body may include a front case 101 and a rear case 102. A space formed by the front case 101 and the rear case 102 may accommodate various components therein. At least one intermediate case may further be disposed between the front case 101 and the rear case 102. A battery cover 103 for covering a battery 191 may be detachably mounted to the rear case 102.

Such cases may be formed by injection-molded synthetic resin, or may be formed using a metallic material such as stainless steel (STS) or titanium (Ti).

At the front case 101, may be disposed a display unit 151, a first audio output unit 153a, a first camera 121a, a first user input unit 131, etc. On the side surfaces, may be disposed a microphone 122, an interface unit 170, a second user input unit 132, etc.

The display unit 151 may output information processed in the mobile terminal 100. The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

The display unit 151 may include a touch sensing mechanism to receive a control command by a touch method. When a touch is made to any one place on the display unit 151, the touch sensing mechanism may be configured to sense this touch and enter the content corresponding to the touched place. The content entered by a touch method may be a text or numerical value, or a menu item capable of indication or designation in various modes.

The touch sensing mechanism may be formed with transparency to allow visual information displayed on the display unit 151 to be seen, and may include a structure for enhancing the visibility of a touch screen at bright places. Referring to FIG. 3A, the display unit 151 occupies a most portion of the front surface of the front case 101.

The first audio output unit 153a and the first camera 121a are disposed in a region adjacent to one of both ends of the display unit 151, and the first manipulation input unit 131 and the microphone 122 are disposed in a region adjacent to the other end thereof. The second manipulation interface 132 (refer to FIG. 3B), the interface 170, and the like may be disposed on a lateral surface of the terminal body.

The first audio output module 153a may be implemented in the form of a receiver for transferring voice sounds to the user's ear or a loud speaker for outputting various alarm sounds or multimedia reproduction sounds.

It may be configured such that the sounds generated from the first audio output module 153a are released along an assembly gap between the structural bodies. In this instance, a hole independently formed to output audio sounds may not be seen or hidden in terms of appearance, thereby further simplifying the appearance of the mobile terminal 100. However, the present invention is not limited to this, but a hole for releasing the sounds may be formed on the window.

The first camera 121 a processes video frames such as still or moving images obtained by the image sensor in a video call mode or capture mode. The processed video frames may be displayed on the display unit 151.

The user input unit 130 is manipulated to receive a command for controlling the operation of the mobile terminal 100. The user input unit 130 may include a first and a second manipulation unit 131, 132. The first and the second manipulation unit 131, 132 may be commonly referred to as a manipulating portion, and any method may be employed if it is a tactile manner allowing the user to perform manipulation with a tactile feeling such as touch, push, scroll or the like.

In the present drawing, the first manipulation unit 131 is a touch key, but the present invention is not limited to this. For example, the first manipulation unit 131 may be configured with a mechanical key, or a combination of a touch key and a mechanical key.

The content received by the first and/or second manipulation units 131, 132 may be set in various ways. For example, the first manipulation unit 131 may be used to receive a command such as menu, home key, cancel, search, or the like, and the second manipulation unit 132 may receive a command, such as controlling a volume level being output from the first audio output module 153 a, or switching into a touch recognition mode of the display unit 151.

The microphone 122 may be formed to receive the user's voice, other sounds, or the like. The microphone 122 may be provided at a plurality of places, and configured to receive stereo sounds.

The interface unit 170 serves as a path allowing the mobile terminal 100 to exchange data with external devices. For example, the interface unit 170 may be at least one of a connection terminal for connecting to an earphone in a wired or wireless manner, a port for near field communication (for example, an Infrared Data Association (IrDA) port, a Bluetooth port, a wireless LAN port, and the like), and a power supply terminal for supplying power to the mobile terminal 100. The interface unit 170 may be implemented in the form of a socket for accommodating an external card such as Subscriber Identification Module (SIM) or User Identity Module (UIM), and a memory card for information storage.

FIG. 3B is a rear perspective view illustrating mobile terminal 100 illustrated in FIG. 3A. Referring to FIG. 3B, a second camera 121b may be additionally mounted at a rear surface of the terminal body, namely, the rear case 102. The second camera 121b has an image capturing direction, which is substantially opposite to the direction of the first camera unit 121 a (refer to FIG. 3A), and may have a different number of pixels from that of the first camera unit 121a.

For example, it is preferable that the first camera 121a has a relatively small number of pixels enough not to cause difficulty when the user captures his or her own face and sends it to the other party during a video call or the like, and the second camera 121b has a relatively large number of pixels since the user often captures a general object that is not sent immediately. The first and the second camera 121a, 121b may be provided in the terminal body in a rotatable and popupable manner.

Furthermore, a flash 123 and a mirror 124 may be additionally disposed adjacent to the second camera 121b. The flash 123 illuminates light toward an object when capturing the object with the second camera 121b. The mirror 124 allows the user to look at his or her own face, or the like, in a reflected way when capturing himself or herself (in a self-portrait mode) by using the second camera 121b.

A second audio output unit 153b may be additionally disposed at a rear surface of the terminal body. The second audio output unit 153b together with the first audio output unit 153a (refer to FIG. 3A) can implement a stereo function, and may be also used to implement a speaker phone mode during a phone call.

An antenna for receiving broadcast signals may be additionally disposed at a lateral surface of the terminal body in addition to an antenna for making a phone call or the like. The antenna constituting part of the broadcast receiving module 111 may be provided in the terminal body in a retractable manner.

A power supply unit 190 for supplying power to the mobile terminal 100 may be mounted on the terminal body. The power supply unit 190 may be incorporated into the terminal body, or may include a battery 191 configured in a detachable manner on the outside of the terminal body. According to the drawing, it is illustrated that the battery cover 103 is combined with the rear case 102 to cover the battery 191, thereby restricting the battery 191 from being released and protecting the battery 191 from external shocks and foreign substances.

Further, if a main body of the mobile terminal is moved, a predetermined screen information is output to a display unit 151 in an inactivated state according to an embodiment of the present invention. Here, the "state where the display unit 151 is inactivated" means a state where a source that is provided inside the display unit 151 to illuminate the display unit 151 turns off. That is, in the state where the display unit 151 is inactivated, no information or no graphic image is displayed on the display unit 151.

If the display unit 151 is in the inactivated state, the controller 180 controls a sensing unit 210 so a movement of the body of the mobile terminal is sensed, and when the movement is sensed, outputs screen information to the display unit 151 or switches the display unit 151 to an activated state.

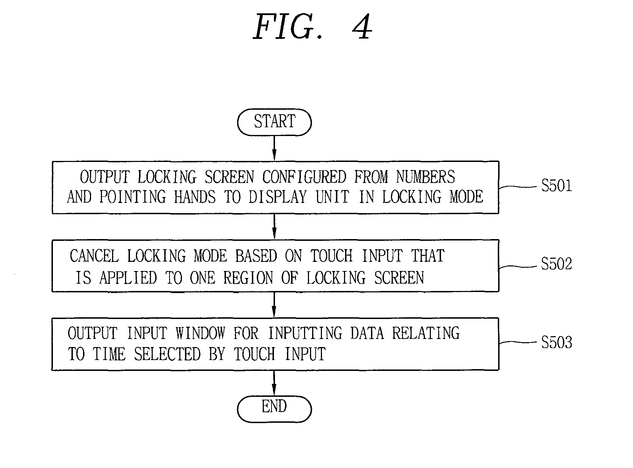

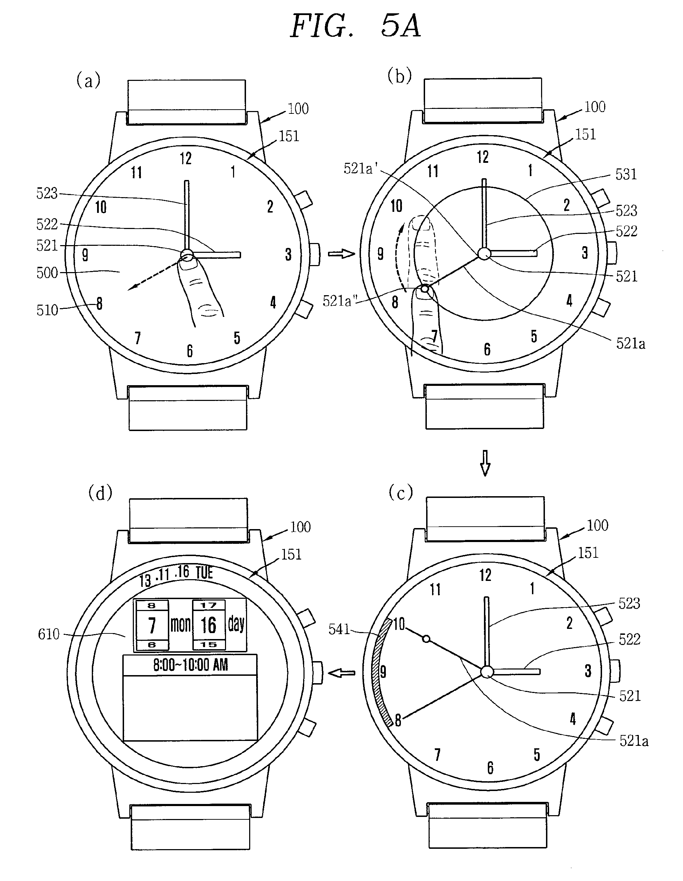

Next, FIG. 4 is a flow chart illustrating a method of controlling the mobile terminal according to one embodiment of the present invention, and FIG. 5A is a diagram illustrating the method in FIG. 4.

Referring to FIG. 4 and FIG. 5A, in a locking mode, a locking screen 500 is output to the display unit 151 (S501). Here, the locking mode refers to when one or more touch inputs to be applied to the display unit 151 are limited. That is, the controller 180 disallows a touch input to be applied to the display unit 151 in the locking mode, and allows a touch input for canceling the locking mode to be applied to the display unit 151 (S502).

In order to cancel the locking mode, the user has to apply the touch input to one predetermined region of the display unit 151 or apply a predetermined-type touch input to the display unit 151. When the predetermined touch input is applied, the controller 180 cancels the locking mode, and displays the locked screen 500 is switched to the predetermined screen information.

The locking screen 500 includes time information. Referring to FIG. 5A(a), the locking screen 500 includes a pointing hand including numbers 510 from 0 to 12 that point to exact hours, a hour hand 522 pointing to a number corresponding to a hour as time passes, and a minute hand 523 pointing to a number corresponding to a minute as time passes. The numbers 510, the hour hand 522, and the minute hand 523 are expressed in various shapes, based on setting by the user. The controller 180 displays a time displayed on the locking screen 500 is automatically converted as time passes. Accordingly, the user can check a current time without a separate control command, using the locking screen output to the display unit 151 of a watch-type mobile terminal.

The locking screen 500 according to the present embodiment may further include a control point 521 in addition to the numbers 510, the hour hand 522, and the minute hand 523. Based on the touch input applied to the control point 521, the controller 180 switches at least one portion of the locking screen 500.

For example, based on the touch input applied to the control point 521, the controller 180 displays a first guideline 531 around the control point 521. In addition, based on the touch input applied to the control point 521, the controller 180 displays a first control hand 521a having a first length. Here, the touch input corresponds to the touch input (for example, a drag-type touch input) that is continuously moved up to a region that comes into contact with the first guideline 531. That is, with the touch input, the control point 521 is formed in a manner that extends by the first length. The first control hand 521 a is formed so one end thereof connects to the control point 521 and the other end 521 a" corresponds to a touch region of the display unit 151, to which the touch input is applied.

However, when the control hand is formed with the touch input and the control hand extends by a predetermined length, the controller 180 displays the first guideline 531. The controller 180 defines as a starting time the hour corresponding to the number that the first control hand 521 a points to. With the continuous touch input applied to the other end 521a" of the first control hand 521a, the controller 180 displays the other end 521a" of the first control hand 521a rotates about the control point 521.

Based on the touch input applied to the first control hand 521a, the controller 180 defines as an ending time the time corresponding to the number that the other end 521 a" of the first control hand 521 a points to at the time when the touch input is released.

In order to alert the user to the starting time and the ending time, the controller 180 outputs an alert display portion 541 along an edge of the display unit 151 to correspond to a region that the other end 521 a" of the first control hand 521 a points to. Referring to FIG. 5A(c), the alert display portion 541 is formed along the region that the first control hand 521a points to, and arranged adjacent to at least one among the numbers. However, a shape of the alert display portion 541 is not limited to this.

When the touch input applied to the first control hand 521a is released, the controller 180 cancels the locking mode and switches the locking screen 500 to a first control screen 610. Here, the first control screen 610 corresponds to an execution screen of an application for inputting a schedule including the time. That is, if the touch input is released when the first control hand 521a having a predetermined length is formed, the controller 180 controls the mobile terminal 100 so the application for inputting the schedule is executed or a schedule input mode is activated.

Based on the touch input, the controller 180 outputs the screen information relating to data associated with the time that is selected (S503). For example, with the touch input applied to the first control hand 521 a, the control unit 180 switches to the first control screen 610 for entering the starting and end times. That is, the first control screen 610 includes a current date, the starting and ending times, and includes items of data that correspond to the starting and ending times and an input window for inputting the schedule including the time.

By applying the touch input to the input window, the user can input the data or change the date on which the data is input. In addition, based on the touch input applied to the display unit 151, the controller 180 performs a different function of the mobile terminal. That is, based on the touch input applied to the control point 521, the controller 180 releases the locking mode. Then, with the touch input applied to the first control hand 521 a, the controller 180 defines the time, and immediately performs a function of inputting data according to the time.

According to an embodiment of the present invention, with the touch input applied to the locking screen on which the time is displayed and which limits the user's touch input, the locking mode is released and at the same time, the function of inputting the data corresponding to the defined time is performed. Accordingly, the user can perform a different function more conveniently, using the locking screen that alerts the user to the time.

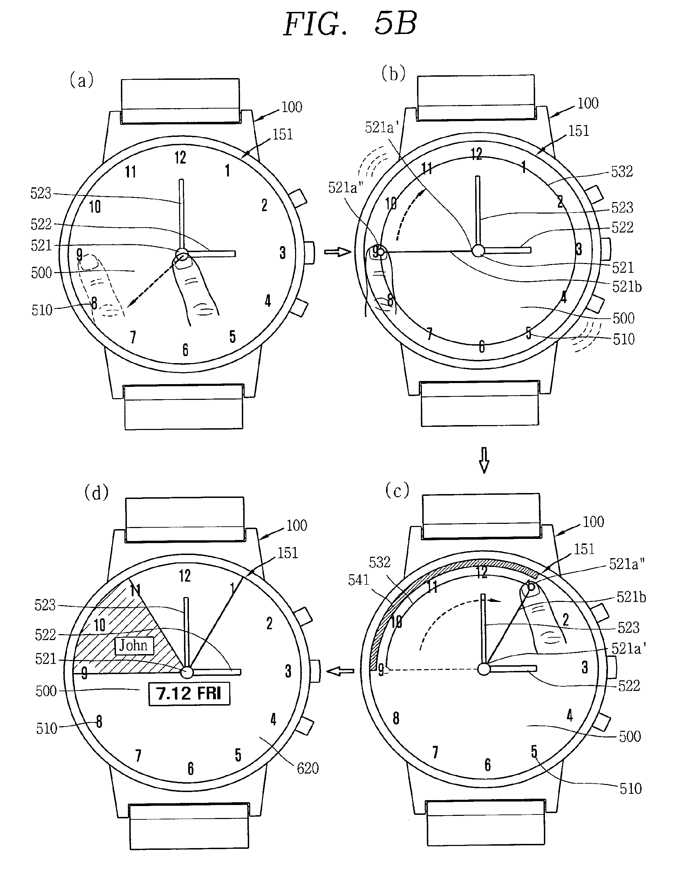

FIGS. 5B(a) to 5B(d) are diagrams illustrating a method of outputting already-stored data using the locking screen. Referring to FIG. 5B, a method of providing data corresponding to the time in question using the control point 521 is described. Based on the touch input applied to the control point 521, the controller 180 transforms the control point 521 into a second control hand 521b having a second length. The second length is formed such that it is greater than the first length.

Based on the touch input applied to the control point 521, a second guideline 532 is output to the display unit 151. If the touch input is first applied to the control point 521, or if the second control hand 521b having the second length is formed, the second guideline 532 is output to the display unit 151.

According to the present embodiment, with the touch input applied to the second control hand 521b and the first control hand 521a, the controller 180 performs different functions. Referring to FIG. 5B, with the touch input applied to the other end 521b" of the second control hand 521b, the controller 180 rotates the second control hand 521b about the control point. The end 521b' is also shown in FIG. 5B(c).

The data according to the time is stored in the memory 160 by the user. If the data corresponding to the time is stored in the memory 160, based on the touch input applied to the second control hand 521b, the controller 180 displays the data. The data according to the time corresponds to schedule information stored by a schedule application and the like. That is, information corresponding to a data and the time is stored in the memory 160.

Based on the touch input applied to the second control hand 521b, the controller 180 moves the control hand 521b. Then, if data corresponding to the number that the second control hand 521b points to is stored in the memory 160, the controller 180 alerts the user.

As illustrated in FIG. 5B(b), if data is present in which 9 o'clock is stored, as the starting time, in the memory 160, when the other end 521b" of the second control hand 521b points to 9 o'clock, the controller 180 vibrates the main body of the mobile terminal. However, a method of alerting the user that the data is stored is not limited to this. For example, the controller 180 can output a sound or display an alert image.

Based on the continuous touch input, the controller 180 moves the other end 521b" of the second control hand 521b. With the user's touch input, the other end 521b" of the second control hand 521b rotates continuously. The controller 180 also displays the alert display portion 541 to a region corresponding to the rotation of the second control hand 521b.

When the touch input applied to the second control hand 521b is released, the controller 180 cancels the locking mode and displays a second control screen 620 including the data. That is, with the touch input applied to the second control hand 521b that passes a starting point in the time corresponding to the data, the controller 180 outputs the data.

In addition, the second control screen 620 includes the data stored in the memory 160. For example, the second control screen 620 includes the hour hand 522, the minute hand 523 and the numbers 510 for alerting the user to the current time, and displays a region that the second control hand 512b passes, in a different manner, in order to display the time corresponding to the data.

Further, the second control screen 620 includes one or more pieces of information included in the data. For example, the second control screen 620 includes at least one, among a title, a keyword, and a date of data corresponding to the starting time and the ending time. In addition, while the second control screen 620 is output, the display unit 151 receives the user's touch input. Based on the touch input applied to a region of the second control screen 620, which corresponds to the title, the data, or the time, the controller 180 displays the data corresponding to the time.

Accordingly, the user can recognize the presence or absence of the data corresponding to the time using the control point, and can be provided more conveniently with the data corresponding to the time as soon as the locking mode is canceled.

According to an embodiment of the present invention, different functions are performed according to the length of the control hand formed by the user. That is, when the user's touch input is released, the controller 180 activates different modes according to the length of the control hand. A method of alerting the user that different modes are activated is described below.

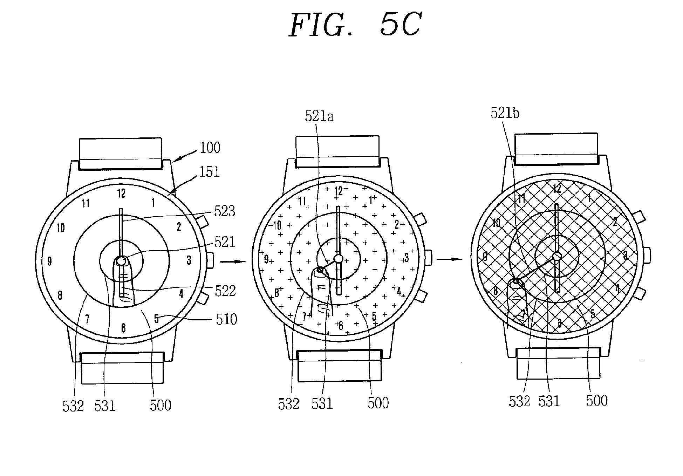

Next, FIG. 5C is a diagram illustrating a method of displaying a mode switch according to the length of the control hand. When the first control hand 521 a and the second control hand 521b are formed starting from the control point 521, the display unit 151 alerts the user to the first control hand 521a and the second control hand 521b in different shapes.

If a predetermined-type touch input (for example, the long touch input) is applied to the control point 521, the controller 180 displays the first and second guidelines 531 and 532, which have predetermined different diameters and are concentrically formed around the control point 521. Further, when the touch input applied to the control point 521 is released, the controller 180 stops displaying the first and second guidelines 531 and 532.

In addition, based on the touch input that extends from the control point 521, the first control hand 521a is output to the display unit 151. If the touch input applied to the formed first control hand 521a is applied to the first guide line 531, the controller 180 outputs an alert notification. The alert notification corresponds to a predetermined-type vibration or alerting sound that is set in the mobile terminal. Alternatively, the controller 180 displays a predetermined-color locking screen 500 on the display unit 151.

As with the first control hand 521 a, if the continuous touch input forming the second control hand 521b is applied to the second guide line 532, the controller 180 outputs the alert notification. Accordingly, the user can recognize that the control hands having the lengths that correspond to the different modes, respectively, were formed with the touch input. Then, if the touch input is released, the user can activate the corresponding mode.

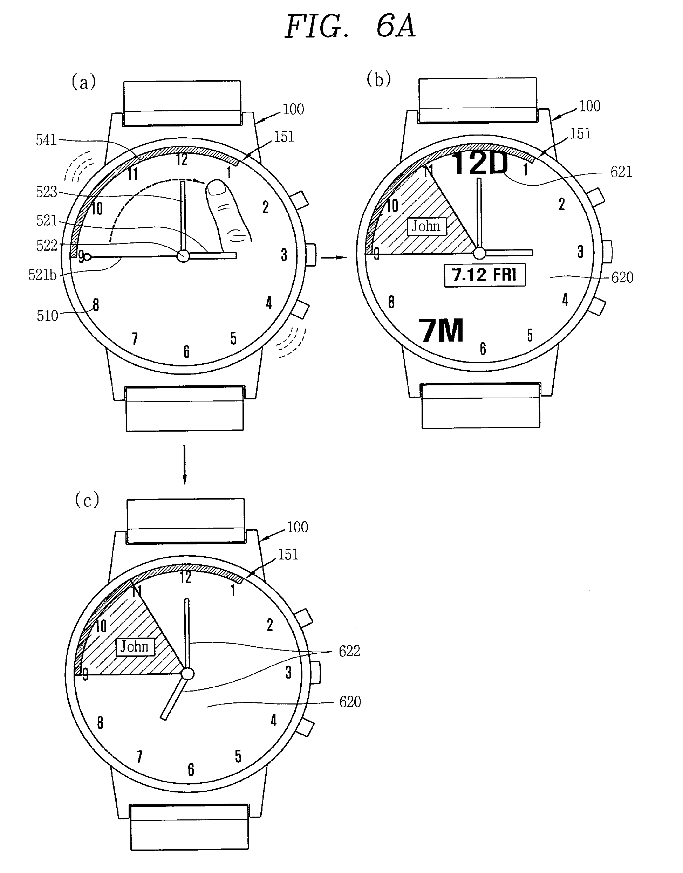

Next, FIGS. 6A-6E are diagrams illustrating a method of outputting the already-stored data using the locking screen. Referring to FIGS. 6A(a) and 6A(b), based on the touch input applied to the second control hand 521b, the controller 180 alerts the user that data is stored in the memory 160. Then, when the touch input applied to the second control hand 521b is released, the controller 180 cancels the locking mode.

While canceling the locking mode, the controller 180 outputs the second control screen 620 on the display unit 151. The second control screen 620 displays the presence of the data corresponding to the time and includes brief information on the data. In addition, the controller 180 displays a date corresponding to the data is transformed and is displayed.

For example, an indication M that the number corresponds to the month is provided adjacent to the number that corresponds to the month in the data, and an indication D that the number corresponds to the day is provided adjacent to the number that corresponds to the day in the data. The numbers corresponding to a month and a day are output in the shape different from those of the other numbers. That is, according to the present embodiment, the corresponding data is displayed more conveniently using the numbers included in the locking screen.

Referring to FIGS. 6A(b), with the touch input applied to the second control hand 521b, the controller 180 displays the hour hand 522 and the minute hand 523 point to the numbers corresponding to the date of the data corresponding to the time, respectively. For example, the controller 180 displays the hour hand 522 points to the number corresponding to a month in the format of a date and the minute hand 523 points to the number corresponding to a day in the format of a date.

That is, according to an embodiment of the present invention, although the locking mode is canceled and thus the locking screen is switched to the second control screen 620, the number is output as is, thereby providing a seamless connection. In addition, date information on the data is provided more conveniently using the numbers.

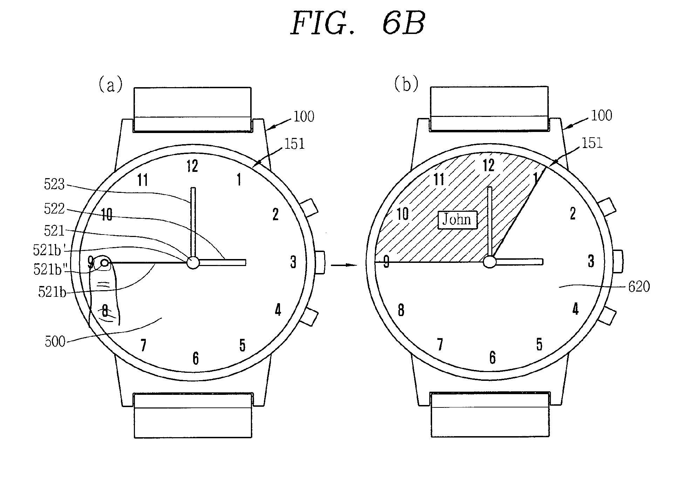

A method of providing the data according to another embodiment is described referring to FIGS. 6B. Referring to FIG. 6B(a), when the number that the other end 521b" of the second control hand 521b points to corresponds to the time of the time stored in the memory 160, the controller 180 outputs the alert notification that alerts the user that the data is stored. As described above, the alert notification corresponds to vibration of the main body of the mobile terminal, a change of an image output to the display unit 151, or alerting sound output to the sound output unit 153.

Based on the touch input applied to the other end 521b" of the second control hand 521b, the controller 180 displays the data which is stored in the memory 160 and which includes the time that the second control hand 521b points to. Then, the controller 180 cancels the locking mode. Here, the touch input is distinguished from the touch input for forming the second control hand 521b. For example, the touch input corresponds to the long touch input that is applied, for about several seconds, to the other end 521b" of the second control hand 521b.

That is, when the long touch input applied to the other end 521b" of the second control hand 521b pointing to the already-stored time is received, the controller 180 displays the second control screen 620 including the data including the time. According to the present embodiment, the user can check the data that is stored more easily without applying the touch input defining the ending time.

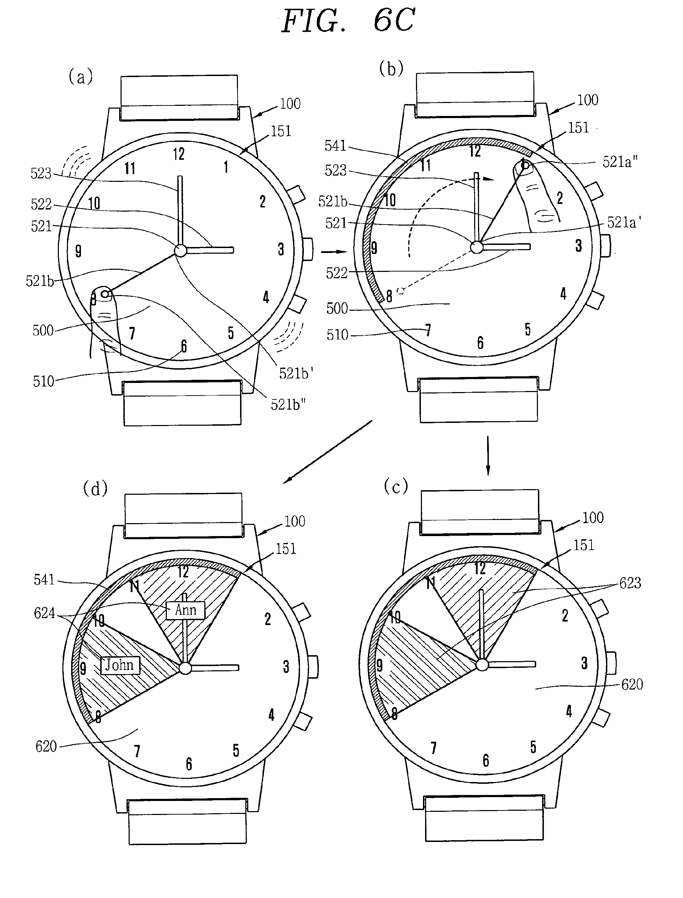

A method of providing multiple stored items of data is described referring to FIGS. 6C(a) to 6C(d). Referring to FIGS. 6C(a) and 6C(b), based on the touch input applied to the second control hand 521b, the controller 180 cancels the locking mode. Then, when the touch input applied to the other end 521b" of the second control hand 521b is released, the controller 180 displays the data which is stored in the memory 160 and which includes the time corresponding to a region to which the touch input to the other end 521b" of the second control hand 521b is applied. One end 521b' of the second control hand 521b connects to the control point 521 and the other end 521b" of the second control hand 521b is formed in a manner that is positioned near an edge of the display unit 151.

Referring to FIG. 6C(c), based on the releasing of the touch input, the controller displays the second control screen 620. The second control screen 620 includes the multiple different items of data. The second control screen 620 includes the numbers 510, and multiple divisional images 623 that are displayed as a result of separating the second control screen 620 into regions corresponding to the numbers 510.

The divisional images 623 correspond to different items of data, respectively, and are output in the shapes of arcs that results from dividing the display unit 151 in a manner that points to the numbers arranged along a circumference of the display unit 151. The divisional images 623 are formed adjacent to each other, or a distance away from one another, according to the time included in the data. In addition, the divisional images 623 are configured to take on different shapes. For example, the divisional images are formed to take on different colors.

Referring to FIG. 6C(d), the second control screen 620 includes different divisional images 624. The divisional image 624 is substantially the same as the shape of the divisional image in FIG. 6C(c). However, the divisional image 624 may further include one or more pieces of information included in the data. That is, the divisional images distinguish between the multiple pieces of data are distinguished from one another, based on one or more pieces of information included in the items. Accordingly, the user can be provided at a time with pieces of data corresponding to different times.

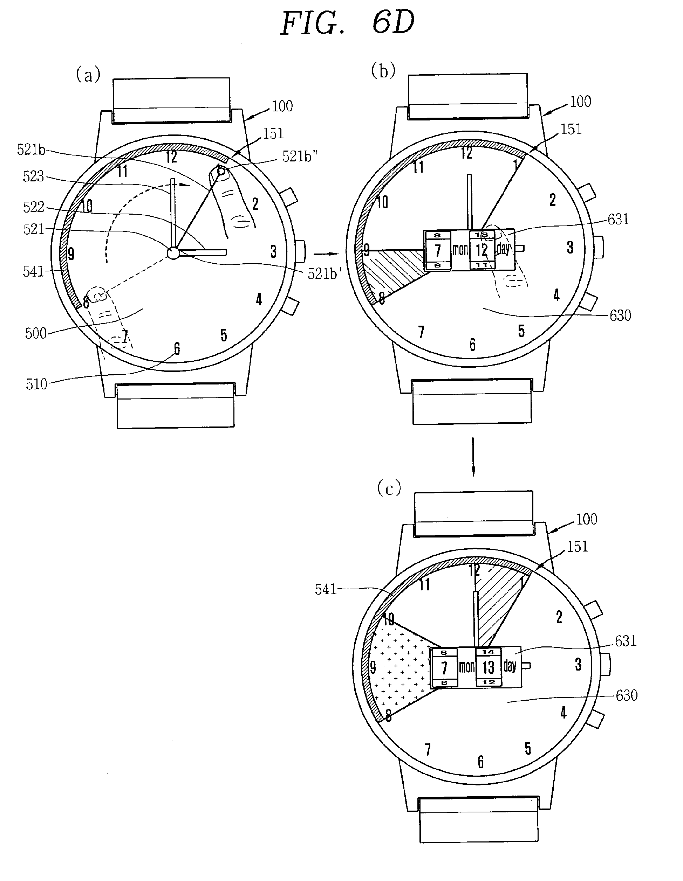

A method of providing the pieces of data corresponding to different dates is described referring to FIG. 6D. Referring to FIGS. 6D(a) and 6D(b), based on the touch input applied to the other end 512b" of the second control hand 521b, the controller 180 outputs the alert display portion 541. Then, if the touch input applied to the second control hand 521b is released, the controller 180 cancels the locking mode.

In addition, the controller 180 displays a third control screen 630. The third control screen 630 includes a date control window 631. The date control window 631 indicates a current data and includes a control icon for changing the current date. The third control screen 630 includes the data including the current date, and includes the alert display portion 541 corresponding to the touch input applied to the second control hand 521b.

Based on the touch input applied to the date control window 631, the controller 180 displays data corresponding to a different date that results from changing. For example, if data including the time which corresponds to the alert display portion 541 is present on the date that results from the changing, and is stored, the data is displayed. Accordingly, using the locking screen, the user can first set the time that he/she wants to know, and be provided with data including a data that he/she wants, among multiple dates.

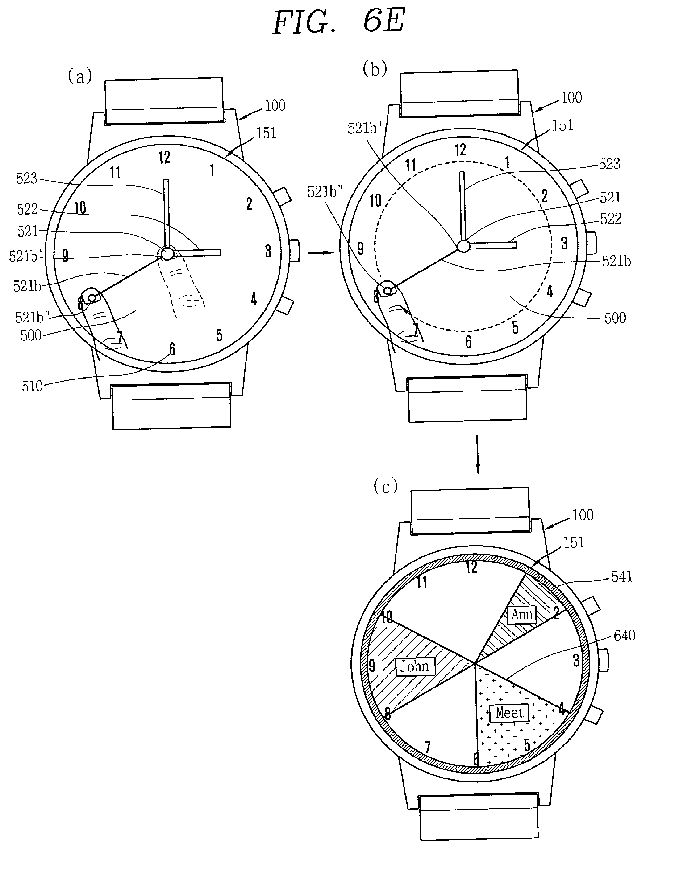

A method of providing the stored data at a time is described referring to FIGS. 6E(a) to 6E(c). Referring to FIGS. 6E(a) and 6E(b), based on the touch input applied so the other end 521b" of the control hand 521b rotates one time along the circumference of the display unit 151, the controller 180 cancels the locking mode. A fourth control screen 640 that includes the alert display portion 541 along the circumference of the display unit 151 is output to the display unit 151.

The controller 180 displays the items of data corresponding to times, which are stored in the memory 160. For example, the controller 180 displays data that has been stored for a period of at least 12 hours, such as data limited to a current date and data limited to the morning (or the afternoon) of the current date, is output together.

The controller 180 outputs the data in the different shapes according to the importance of the data. For example, when it comes to storing the data, the data is stored in the memory 160 along with information on the importance of the data. In addition, the controller 180 determines the importance of the data according to a predetermined reference. For example, the predetermined reference is whether or not the data is regularly stored, schedule information on a meeting with a specific person, and the like.

The divisional images corresponding to the items of data are output in the different shapes to the display unit 151. For example, the divisional images are displayed in colors that differ according to the importance of the data. In addition, the controller 180 displays one or more pieces of information included in the data that is classified as important data and that corresponds to the divisional image are included. However, any method distinguishes important data from unimportant data may be possible.

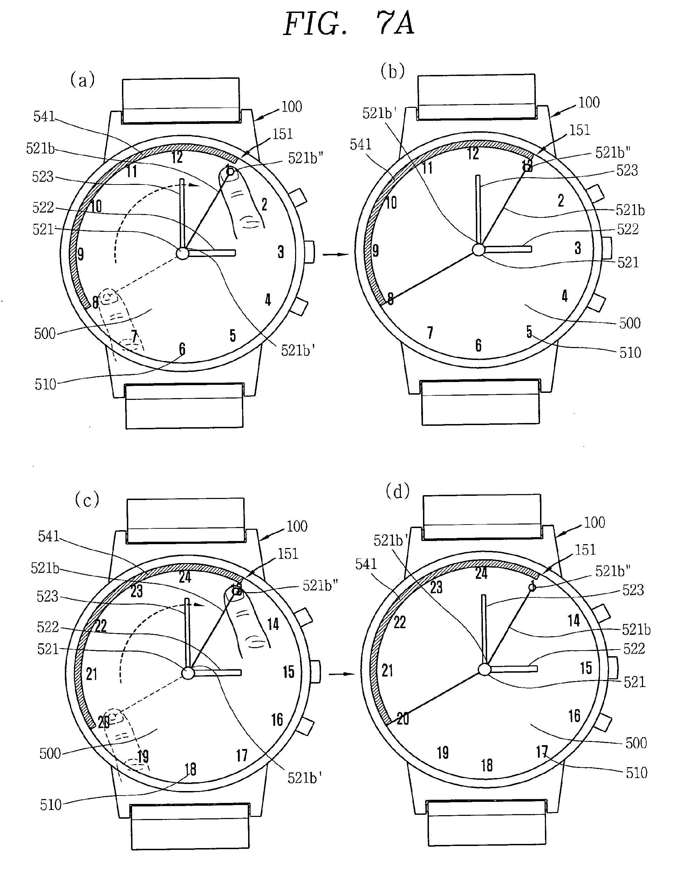

Next, FIGS. 7A-7C are diagrams illustrating a method of controlling the locking screen using the control hand according to another embodiment. In particular, a method of changing the numbers 510 according to a movement of the control hand is described referring to FIG. 7A. The numbers 510 on the locking screen 500 indicate 24 hours a day, ranging from 00 : 00 (24 : 00) to 23 : 00. The 12 numbers that are all included in the locking screen 500 indicate the hours of the morning or of the afternoon.

Referring to FIGS. 7A(a) and 7A(b), with the touch input applied to the other hand 521b" of the control hand 521b, the controller 180 cancels the locking mode. When the touch input that is continuously applied to the second control hand 521b passes a number 12, which indicates 12 o'clock and reaches the next number, the numbers are changed to numbers indicating the morning or the afternoon.

For example, when in the locking screen that includes the numbers from 1 to 12 indicating the morning, the touch input is applied so the second control hand 521b passes the number 12 and comes adjacent to the number 1, the controller 180 changes the number 1 to the number 13 indicating 1 o'clock in the afternoon. In addition, when the second control hand 521b approaches the number 2 indicating 2 o'clock in the morning, based on the touch input, the number 2 is switched to the number 14 on the display unit 151.

A point in time at which the number is changed is not limited to this. For example, when the touch input is applied in a manner that passes the number 12, the controller 180 switches all the numbers prior to the number that the initially-formed second control hand 521b points to. Accordingly, the user can be provided with or input data corresponding to the time in the morning and to the time in the afternoon. Referring to FIGS. 7A(c) and 7A(d), when the touch input is applied in a manner that passes the number 24 (or the number 0), the controller 180 changes the numbers indicating the afternoon to the numbers indicating the morning.

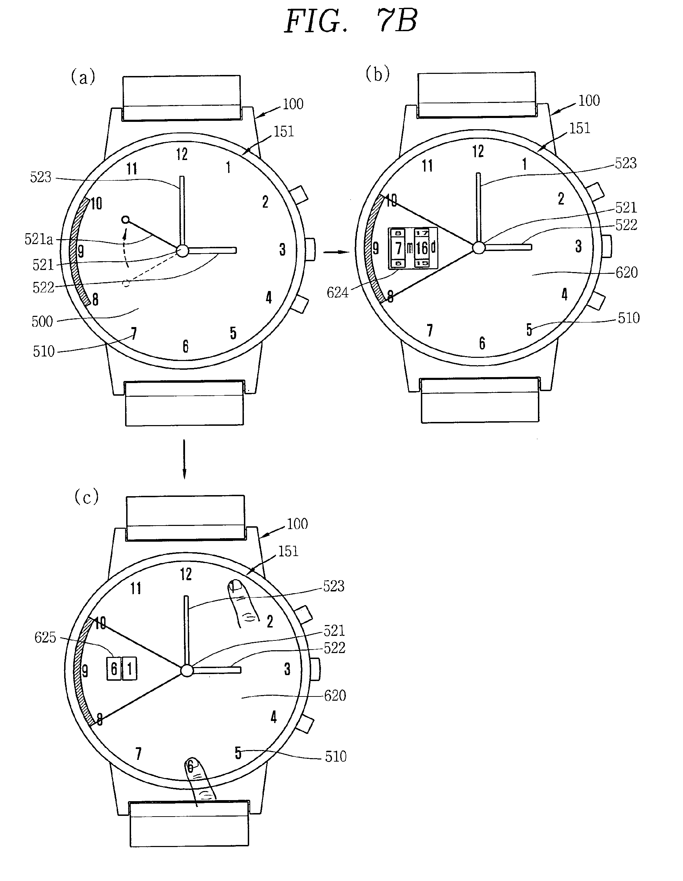

Referring to FIGS. 7B(a) to 7B(c), a method is described in which if the locking mode is canceled with the first control hand 521 a, a control window for changing a data is provided. Referring FIGS. 7B(a) and 7B(b), based on the touch input applied to the first control hand 521a, the controller 180 cancels the locking mode. A first date input unit 624 for inputting dates of pieces of data corresponding to the times until a point in time at which the touch input applied to the control hand 521a is released is output to the display unit 151.

Based on the user's touch input, a date is changed through the first date input unit 624. Based on the touch input applied to one region of the display unit 151, to which the first date input unit 624 is output, the controller 180 changes a day and a month. The first date input unit 624 includes the numbers indicating a day and a month, and an icon for changing a day and a month. Based on the touch input applied to the icon, the controller 180 changes the date stored along with the time. That is, the controller 180 first assigns a date for storage to data that is input. A current date is preferentially displayed on the first date input unit 624.

However, this does not impose any limitation, and the first date input unit 624 may be applied when data that corresponds to the time which is assigned with the touch input which is applied to the second control hand 521b, and stored in the memory 160 is output according to the embodiment. Based on the touch input applied to the icon, the controller 180 displays the changed date. The controller 180 displays the date and the data that corresponds to the time that is selected with the touch input applied with the second control hand 521b are output.

Further, if the data corresponding to the changed time and date is not stored in the memory 160, the controller 180 outputs a message that the data is not stored or outputs information in order for the user to select the date again. The first date input unit 624 is output to a region that corresponds to the time that is assigned with the touch input, but is not limited to this.

Referring to FIGS. 7B(a) and 7B(c), based on the touch input applied to the first control hand 521 a, the controller 180 displays a second date input unit 625. According to the present embodiment, the controller 180 displays the user's touch input applied to the number group 510 is received. A current date is displayed on the second date input unit 625 on the display unit 151. Then, with the touch input applied to the number group 510, a date is assigned on the display unit 151. For example, based on the touch inputs that are sequentially applied to the number group, the controller 180 assigns the data.

Referring to FIG. 7B(c), based on the touch input that is first applied to the number group 510, the controller 180 defines a month. Then, based on the touch input applied next, the controller 180 defines a day. That is, the date that is defmed based on the multiple touch inputs is output to the second date input unit 625 on the display unit 151. Accordingly, the user can assign the time and a date more conveniently using the locking screen 500, and can input or be provided with data corresponding to the time and the date.

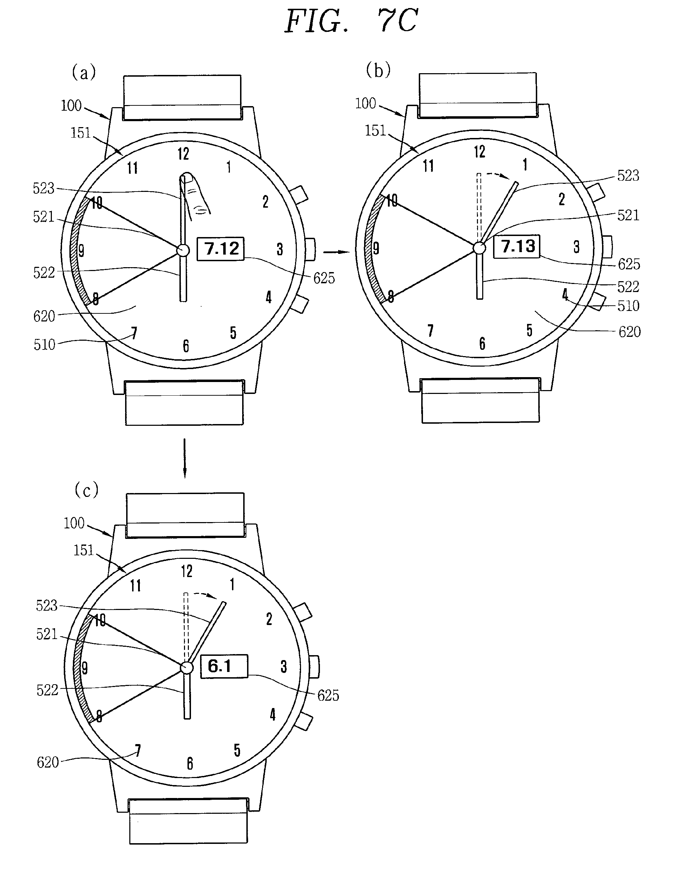

A method of assigning a date using the hour hand and the minute hand on the locking screen is described referring to FIGS. 7C(a) to 7C(c). In particular, FIG. 7C(a) illustrates the display unit 151 to which a control screen 620 in which the starting time and the ending time are defined is output. The control screen 620 includes a third date input unit 625. For example, numbers corresponding to a current date are first displayed on the third date input unit 625.

Referring to FIG. 7C(b), based on the touch inputs that are applied to the hour hand 522 and the minute hand 523, the controller 180 corrects the date. For example, with the touch input applied to the minute hand 523, the controller 180 changes a day in the format of a date. If the minute hand 523 points to 1 in the number group with the touch input applied to the minute hand 523, the controller 180 moves back a day in the format of a date one day later. That is, as many changes as the numbers in the number group 510 that the minute hand 523 points to can be done on the date.

Further, based on the touch input applied to the hour hand 522, the month in the format of a date is changed. In addition, if the hour hand 522 or the minute hand 523 moves in a direction opposite to a rightward direction (a clockwise direction) based on the user's touch input, the date output to the third date input unit 625 is changed to the previous date. In addition, when the date on the third date input unit 625 is changed, the hour hand 622 and the minute hand 623 are displayed on the display unit 151 in a manner that indicates a current time. Accordingly, the user can change a date more easily using the hour hand and the minute hand that make up the locking screen.

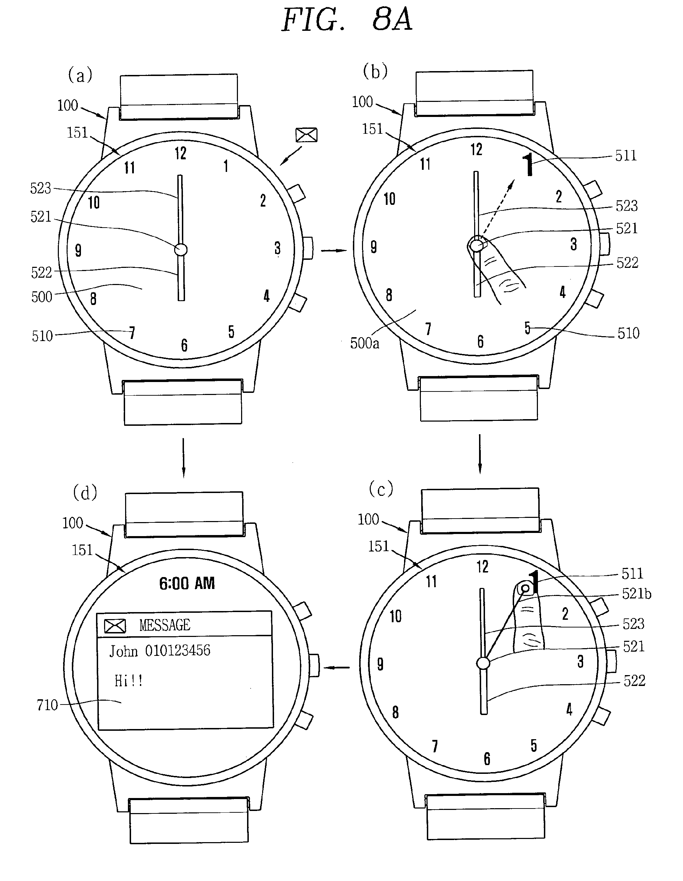

FIGS. 8A-8E are diagrams illustrating a method of providing the alert notification that alerts the user to an event that is received. Referring to FIGS. 8A(a) to 8A(d), a method of outputting the received event using the number group on the locking screen. If the event is received in the locking mode, the controller 180 grasps an attribute of the event and counts the number of the events. The controller 180 displays a shape of the number corresponding to the number of the received events that are classified as having the same attribute is changed to alert the user that the event is received.

As illustrated in FIG. 8A(b), if the mobile terminal receives one message, the controller 180 changes the number 1 in the number group 510 in shape. If the mobile terminal receives a message additionally, the controller 180 changes the shape of a number corresponding to the number of the additionally-received messages. That is, with a number corresponding to the number of substantially the same events, the controller 180 alerts the user that the event is received.

Further, if one message is additionally output when one message is received and thus a number 1 is output in a changed shape 511 on the display unit 151, an output shape of the number 1 is switched to an initial shape and 2 is changed in shape and is output. This alerts the user that the two messages are received. For example, the numbers in the number groups 510 are output to the display unit 151 so they are changed in color or that a predetermined effect (blinking, a change in color, or a change in size) is generated.

According to the present embodiment, based on the touch input applied to the control point 521, the controller 180 cancels the locking mode and an event being output in the changed shape is displayed. As illustrated in FIGS. 8A(c) and 8A(d), based on the touch input applied to the control point 521, the second control hand 521b is output to the display unit 151. If the second control hand 521b that is displayed based on the touch input points to one number in the changed shape in the number group 510, the controller 180 displays an event corresponding to the number in the changed shape.

When the second control hand 521b is formed and the touch input applied to the display unit 151 is released, the controller 180 cancels the locking mode. In addition, the controller 180 switches the locking screen 500 to screen information 710 on the event. Accordingly, the number group 510, the hour hand 522, the minute hand 523, the control point 521 that make up the locking screen 500 disappear from the display unit 151.

Here, the touch input for outputting the event corresponds to a continuous touch input that moves from the control point 421 up to one number in the number group 510 or a continuous touch input that forms the second control hand 521b having a predetermined length. Accordingly, the user can check the number of the received events in the locking mode. The user can cancel the locking mode using the number group and the control hand, and at the same time, can be provided information relating to an event more conveniently. Further, the controller 180 displays the number group 510 to correspond to various types of events that are received in the mobile terminal.

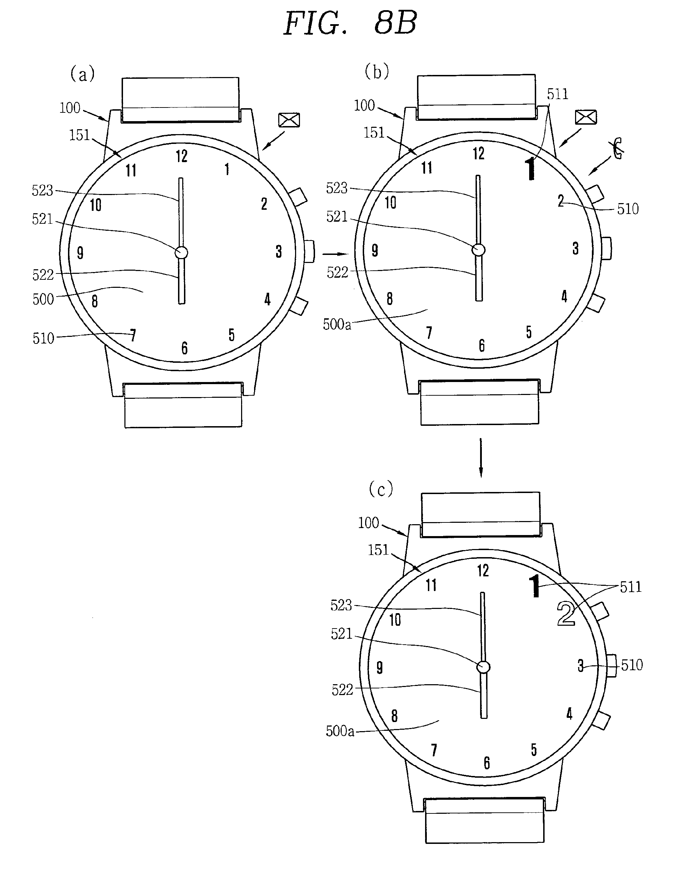

Referring to FIGS. 8B(a) to 8B(c), a method is described in which multiple different events are received, the user is alerted to this. Referring to FIGS. 8B(a) to 8B(b), the display unit 151 transforms a number 1 in the number group 510 in order to correspond to one message that is received in the mobile and displays the transformed number 1.

When one message is additionally received and one call is received in the absence of the user in the mobile terminal, the controller 180 transforms a number 1 and a number 2 in the number group 510. The number 2 corresponding to the two received messages are transformed according to the reception of the additional message and are output. In addition, when one call that is distinguished from the message is received in the absence of the user, the controller 180 displays a number 1 in the changed shape 511.

Here, shapes of the numbers 1 and 2 corresponding to different events are specified differently. The controller 180 differently defines the shapes of the numbers in the number group, which correspond to different events, and displays the number in the number group 510 is changed according to the received event.

Referring to FIG. 8B(c), the number 2 corresponding to the received two messages and the number 1 corresponding to the received one call in the absence of the user are output to the display unit 151 in the different shapes. For example, the shapes are different in at least one, among font, size, and color, from one another. The message and the number that alert the user to the call in the absence of the user are displayed in different colors. The shape of the number corresponding to each event is specified by the user.

Accordingly, if the multiple different events are received, the user can receive the events in a manner that distinguishes between them. In addition, the received event is output to the display unit 151 more conveniently using the numbers in the changed shape in the number group and the control point.

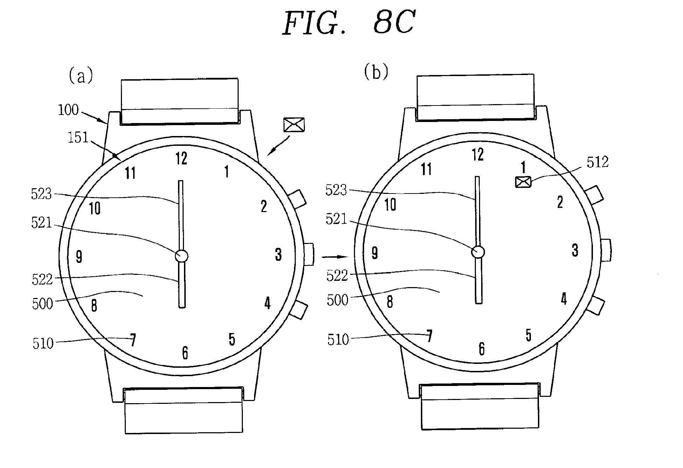

A method of alerting the user to the received event according to another embodiment is described referring to FIGS. 8C(a) and 8C(b). When the event is received, the controller 180 displays an icon 512 for the event adjacent to the number group 510. Here, the icon 512 corresponds to an application corresponding to an application that is executed to receive the event. Using the icon 512, the user can recognize what event is received.

The icon 512 corresponding to the event is output adjacent to one number in the number group 510, which corresponds to the number of the received events. Accordingly, information on a type of received event and the number of substantially the same kinds of events is output to the display unit 151, using the icon 512. Further, if substantially the same type of event is additionally received, the icon 512 is arranged adjacent to a different number.

As described in FIGS. 8A-8C, the controller 180 displays the screen information on the event with the first control hand 521a. Further, the controller 180 performs control so one region of the display unit, to which the icon 512 is output, receives the touch input. Then, when the touch input is received in the icon 512, the controller 180 displays the screen information on the event corresponds to the icon 512.

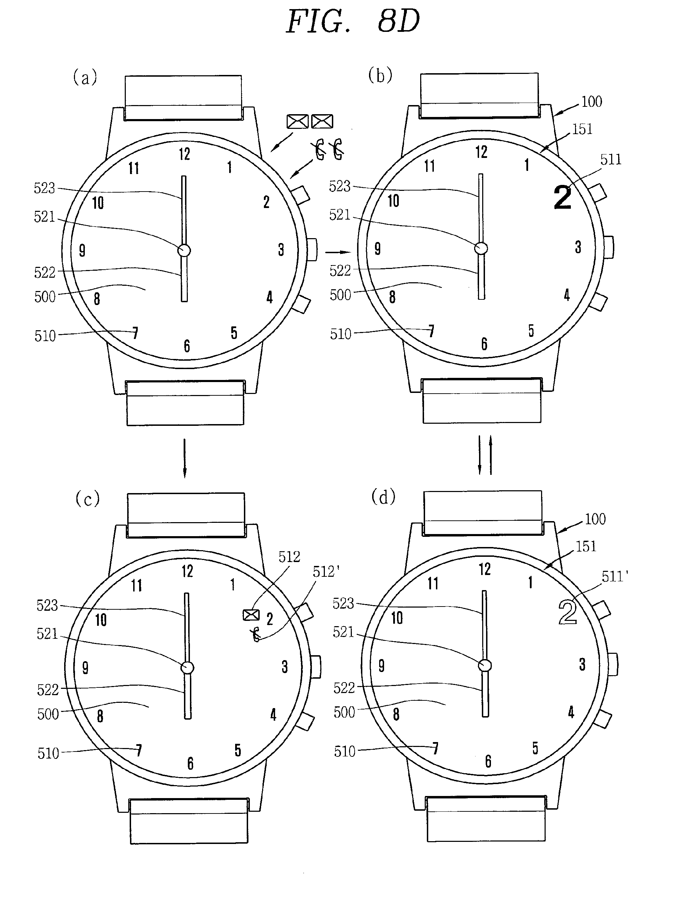

Referring to FIGS. 8D(a) to 8D(d), a method is described in which if multiple different events are received, the multiple different events are displayed on the display unit 151. In particular, referring to FIG. 8D(a), the mobile terminal receives first and second different events that are the same in number. That is, the mobile terminal receives two text messages and two calls in the absence of the user.

Referring to FIGS. 8D(b) and 8D(c), the controller 180 displays at least one number, among the numbers in the number group 510, which indicate the number of the first events and the number of the second events, respectively, in the changed shape 511. In order to display the first and second different events that are the same in number, the controller 180 displays one number that is transformed into first and second different shapes 511 and 511' in the alternating first and second shapes 511 and 511'. That is, if colors of the numbers corresponding to the first and second events, respectively are defined, the colors of the numbers are output on the display unit 151 so the number alternates between the colors.

That is, the fact that the multiple events was received is noticeable to the user through the use of one number. If one event, among the first and second events, is additionally received, the controller 180 limits the transforming of one number in the alternating shapes and the one number indicates only one event.

Referring to FIGS. 8D(a) and 8D(d), first and second different icons 512 and 512' that indicate the first and second events, respectively, are output to the display unit 151. The first and second icons 512 and 512' are displayed in positions adjacent to the numbers in the number group 510, which correspond to the number of the received first events and the number of the received second events, respectively.

That is, if two messages and two calls in the absence of the user are received, an icon for the message and an icon for the call in the absence of the user are output adjacent to the number 2. Further, based on the touch input applied to the control point 521, and the touch input applied to the number group 510 in the changed shape or the icon 512, the controller 180 displays the screen information corresponding to each of the events. Based on a position in which the touch input is, or on a point in time at which the touch input and the number group in the changed shape are output, the screen information on one event, among the multiple events, is selectively output on the display unit 151.

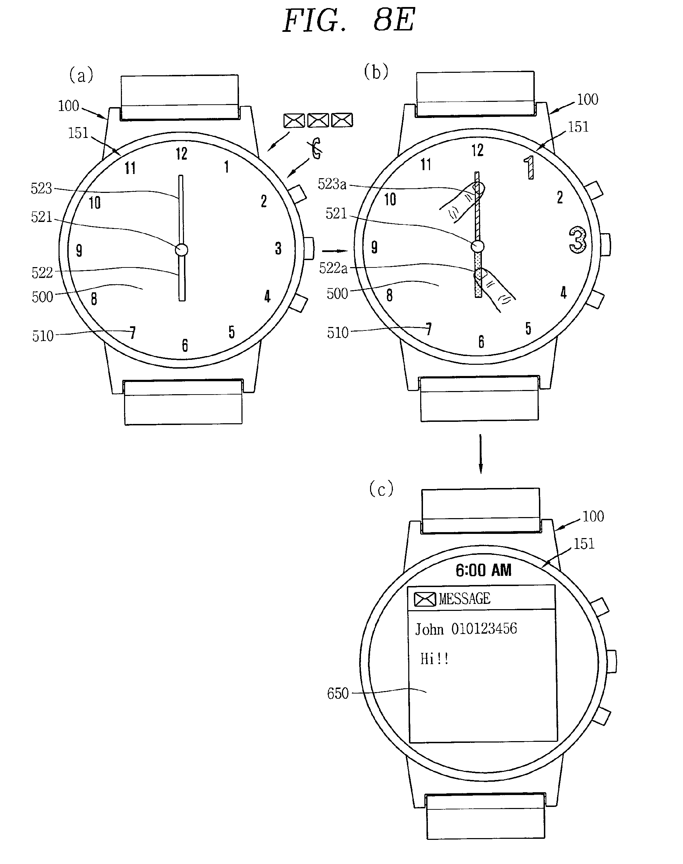

Referring to FIGS. 8E(a) to 8E(c), a method is described in which the screen information on the event is output using the hour hand 522 and the minute hand 523. If multiple groups of events that are different in number from one another are received, the control unit 180 provides an indication that the events were received, to the number corresponding to the number of the events in each of the multiple groups. The numbers in the changed shape are illustrated in FIGS. 8E(a) to 8E(c), and the icon corresponding to the event may be output adjacent to the number.

Referring to FIG. 8E(b), one or more of the numbers in the number group 510 are output in the changed shape on the display unit 151, and the hour hand 522a and the minute hand 523a that are changed in shape to correspond to the numbers in the changed shape are output to the display unit 151.

The hour hand 522a is output in a manner that is transformed to correspond to the number 1, and the minute hand 523a is output in a manner that is transformed to correspond to the number 3. For example, the hour hand 522a in the changed shape is output in the same color as that of the number 1, and the minute hand 523a is output in a manner that has the same pattern as that of the number 3.

Based on the touch inputs that are applied to the hour hand in the changed shape 522a and the minute hand in the changed hand 523a, the controller 180 cancels the locking mode and displays the screen information on the received event. For example, based on the touch input applied to the minute hand 523a in the changed shape that corresponds to the number 3 in the change shape, the controller 180 displays a screen information 650 including the received message.

Here, the touch input corresponds to the touch input applied to the minute hand 523a for a short period of time and is distinguished from the continuous touch input for rotating or transforming the minute hand 523a. That is, the user does not need to apply the continuous touch input (for example, the dragging-type touch input) that transforms the minute hand 523a in a manner that points to the number group 510 or the icon. Accordingly, the user can be provided with the screen information by applying the simple touch input to the display unit 151 that takes up less space relatively.

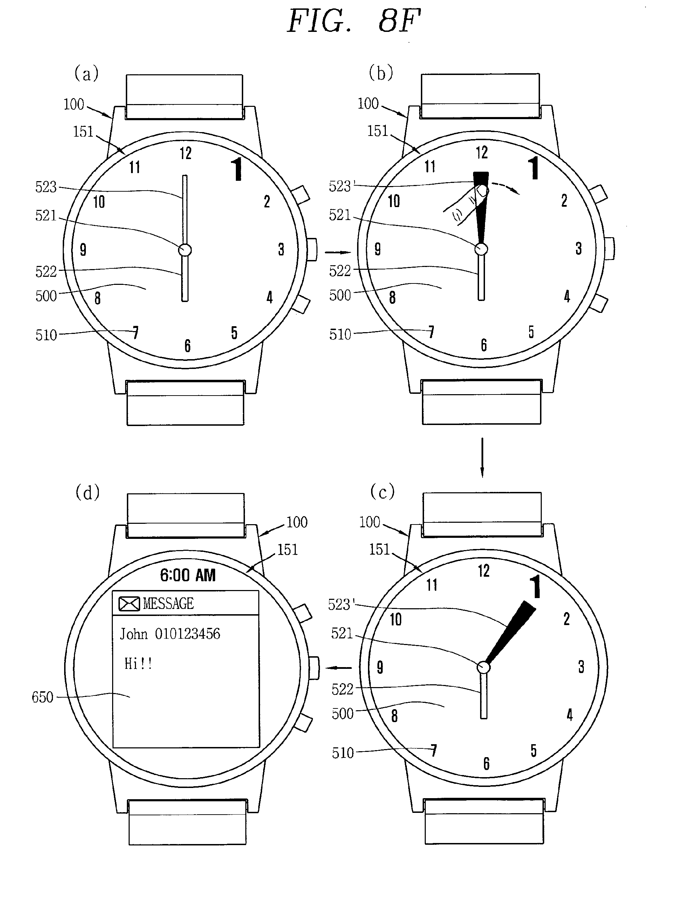

Referring to FIGS. 8F(a) to 8F(d), a method is described in which information on the received event is output using the minute hand. When the event is received, the controller 180 displays the number corresponding to the number of the received events is transformed. The controller 180 displays the touch input applied to the minute hand 523 or the hour hand 522 is received when the number is transformed. For example, the controller 180 displays the minute hand 523' whose shape is changed with the touch input applied to the minute hand 523. That is, when the minute hand is transformed based on the touch input, using this, the user can detect that a function of outputting the information on the event can be performed.

With the continuous touch input applied to the minute hand 523' in the changed shape, the controller 180 moves the minute hand 523'. Based on the touch input, when the minute hand 523' is displayed in a manner that points to the number in the changed shape, the controller 180 displays the information on the event. According to the present embodiment, if the event is received, the information corresponding to the event is provided using at least one, among the minute hand and the hour hand.

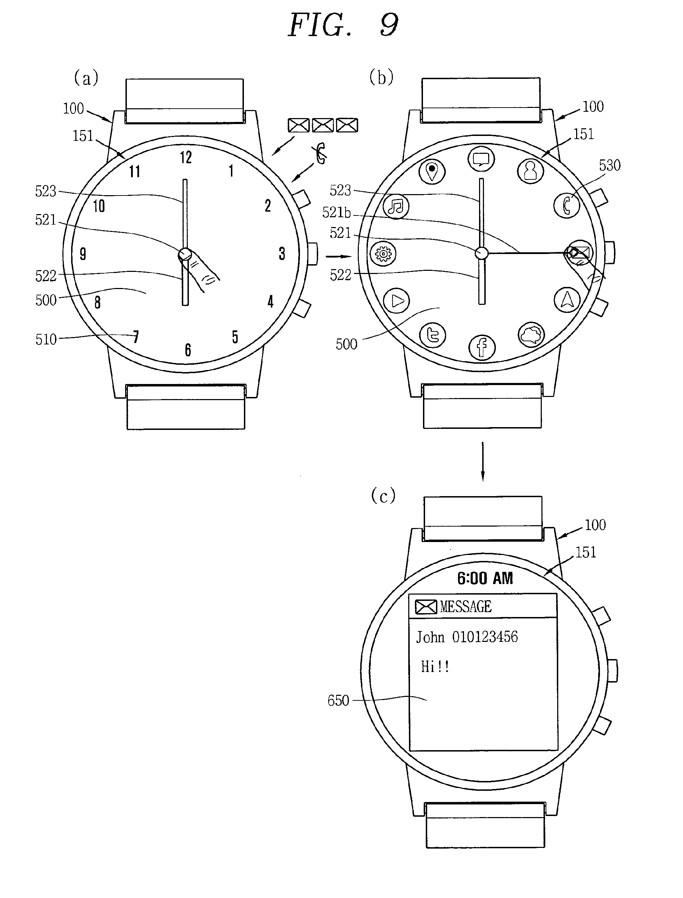

Next, FIGS. 9(a) to 9(c) are diagrams illustrating a method of immediately performing an application using the number group on the locking screen. Referring to FIGS. 9(a) and 9(b), based on the touch input applied to the control point 521, the controller 180 switches the 12 numbers included in the number group 510 to icons 530 for different applications. That is, when the touch input is applied to the control point 521, the controller 180 cancels the locking mode.

Instead of each number, an icon for an application that is selected according to a predetermined reference is output to the display unit 151. For example, an icon to be output is extracted according to the frequency with which an application is executed, and the icon is arranged in a manner that corresponds to each number according to the frequency with which the application is executed. That is, an icon for an application that is most used is displayed on a region to which the number 1 is output.

Alternatively, an icon to be output is extracted according to a point in time at which the application is executed, an icon for an application that is most recently executed is displayed on the region to which the number 1 is output. However, the reference is not limited to this. An icon corresponding to each number may be assigned with the setting by the user and be output. An icon may be arbitrarily extracted and be output. If the received event is present, an icon for an application corresponding to the event may be extracted and be output.

Further, at least one or more, among the numbers in the number group 510, are switched to icons for applications. While at least one icon is output instead of the number in the number group 510, based on the touch input applied to the display unit 151, the controller 180 executes the application.

Referring to FIGS. 9(b) and 9(c), when the second control hand 521b is formed with the continuous touch input applied to the control point 521, an application that is represented by an icon that the second control hand 521b points to is executed. That is, when the touch input applied to the second control hand 521b is applied to a region adjacent to one icon, the controller 180 executes an application that is represented by the icon, and displays the screen information 650 on the application.

In this instance, the controller 180 limits the receiving of the touch input applied to each icon. When the touch input is applied again to the control point 521 when the icons are output to the display unit 151, the controller 180 switches the icons back to the numbers in the number group 510. Further, based on the touch input applied directly to each icon, the controller 180 changes a distance between the icons or displays the icon.

According to another embodiment, based on the continuous touch input applied to the hour hand 522 or the minute hand 523, an application that is represented by an icon that the hour hand 522 or the minute hand 523 points to is executed. In still another embodiment, with the touch input applied directly to the icon when the icons are output, the controller 180 executes the application. Accordingly, based on the simple touch input in the locking mode, the locking mode is canceled and at the same time, an application that the user wants to execute is executed more speedily.

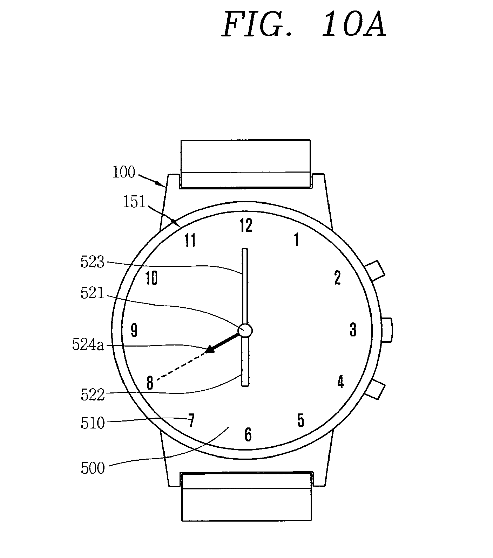

FIGS. 10A-10E are diagrams illustrating a method of controlling the mobile terminal using a functional hand included in a locking screen. The functional hand included in the locking screen is described referring to FIG. 10A. The locking screen that in the locking mode is output to the display unit 151 is substantially the same as the locking screen 500 in FIGS. 5A(a) to 5A(d) except that a first functional hand 524a is included. Therefore, substantially the same configurations are given the same reference numerals, and a redundant description is omitted.

The first functional hand 524a is formed in a manner that extends, by a predetermined length, from the control point 521, and is displayed in the shape that distinguishes the first functional hand 524a from the hour hand 522 and the minute hand 523. According to the present embodiment, the receiving of the touch input applied to the control point 521 is specifically controlled or the receiving of the continuous touch input applied to the control point 521 is moved is controlled.

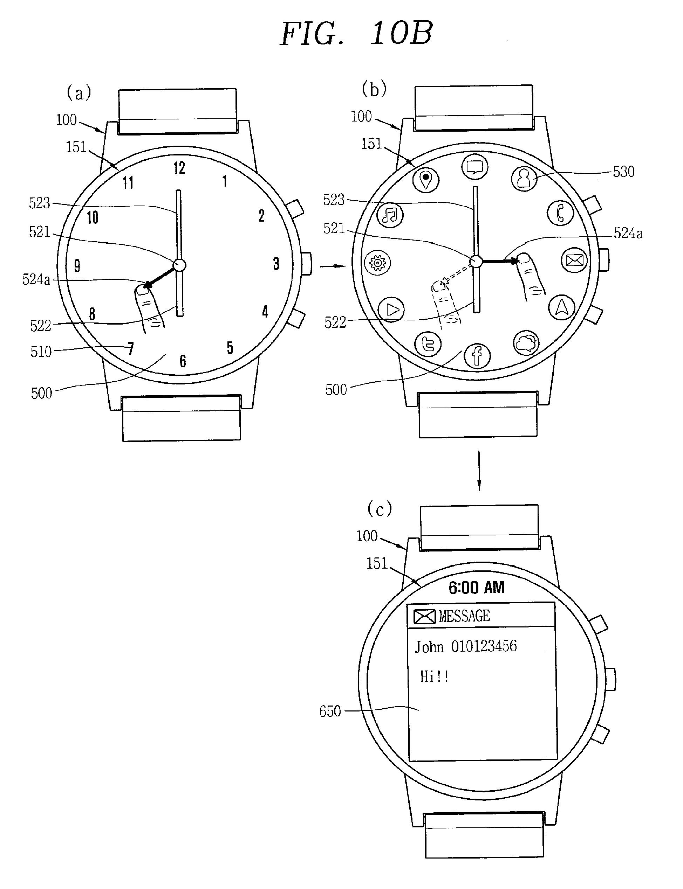

The method of controlling the mobile terminal using the first functional hand 524a is described below. A method of executing an application using the first functional hand 524a is described referring to FIGS. 10B(a) to 10B(c). With the touch input applied to the first functional hand 524a, the controller 180 switches the numbers in the number group 510 switch to icons for multiple applications.

In addition, when the touch input is applied to the control point 521, the controller 180 switches the numbers in the number group 510 to icons 530. Based on the continuous touch input applied to the first functional hand 524a, the first functional hand 524a is rotated to point to one icon among the icons 530. When the touch input is canceled while the first functional hand 524a points to a specific icon, the controller 180 cancels the locking mode and executes an application corresponding to the icon.

Accordingly, on the display unit 151, the locking screen 500 is switched to the screen information 650 on the application. By applying the touch input that moves the first functional hand 524a toward an icon for an application that he/her wants to execute, the user can cancel the mocking mode and at the same time execute the application.

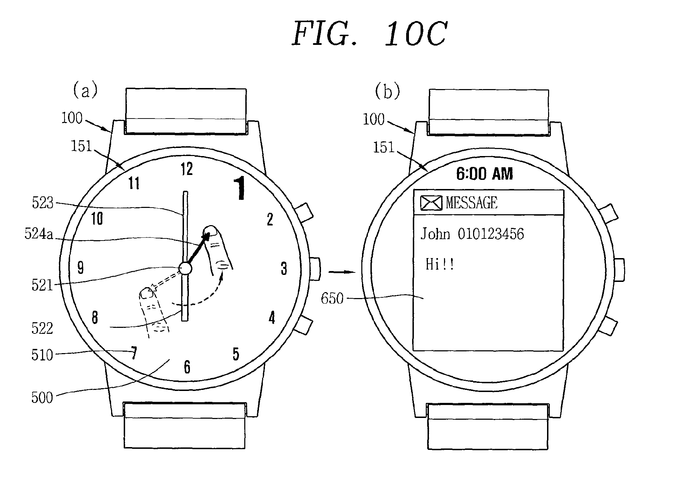

Referring to FIGS. 10C(a) and 10C(b), a method is described in which if an event is received, information on the event is immediately provided using the first functional hand 524a. Referring FIGS. 8A(a) to 8A(d) and FIGS. 10C(a) and 10C(b), when an event is received, in order to alert the user to this, the controller 180 controls the display unit 151 so one number in the number group 510 is transformed.

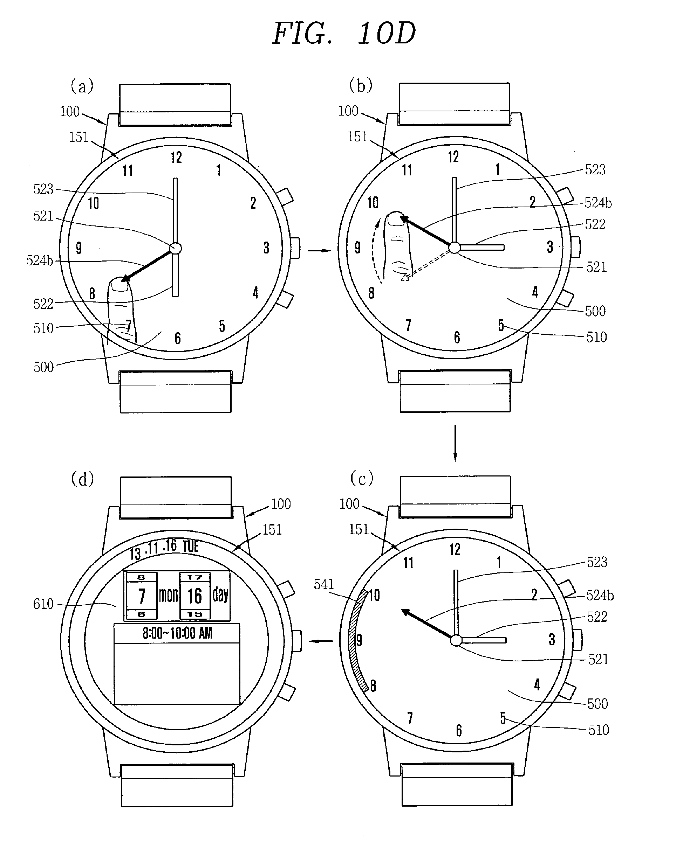

When the first functional hand 542a is output in a manner that points to the number in the changed shape, the controller 180 cancels the locking mode. In addition, the controller 180 displays the screen information relating to the event. Further, based on the touch input continuously applied in a direction in which the first functional hand 524a extends, the first functional hand 524a is switched to or extended into a second functional hand 524b (see FIG. 10D(a), for example. The second functional hand 524b and the first functional hand 524b are formed so they are different in length, and based on the continuous touch input applied to an end portion of the second functional hand 524b, the second functional hand 524a is rotated.

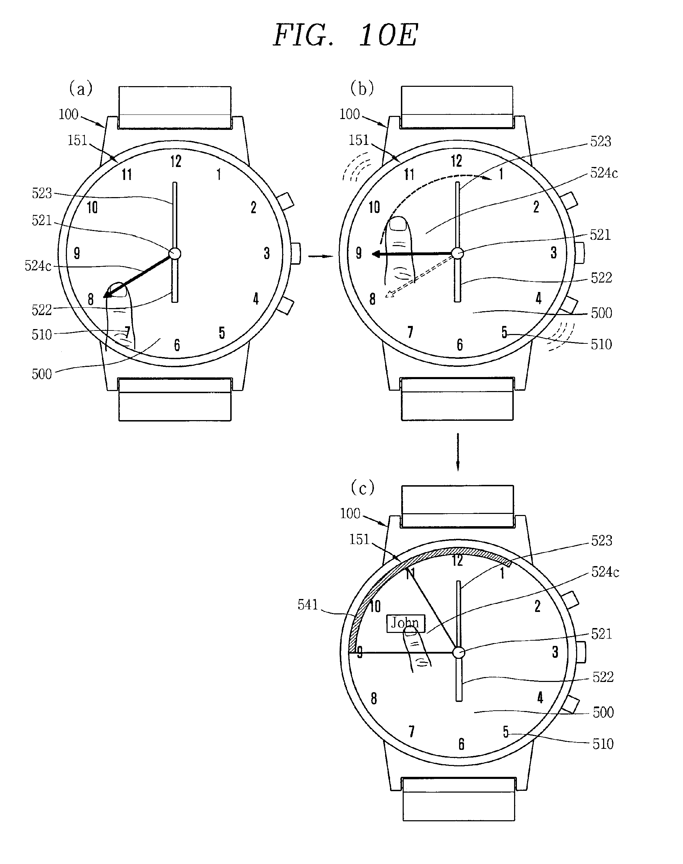

In addition, based on the continuous touch input applied in the lengthwise direction of the second functional hand 542b, the second functional hand 524b is switched to a third functional hand 524c that extends in length more greatly than the second functional hand 524b (see FIG. 10E(a), for example). The first, second, and third functional hands 524a, 524b, and 524c are rotatably formed. Based on the touch input that are applied to the first, second, and third functional hands 524a, 524b, and 524c according to their respective length, different functions are performed.

Further, when the first functional hand 524a is switched to the second functional hand 524b, and the second functional hand 524b is switched to the third functional hand 524c, the controller 180 outputs the alert notification to alerts the user. For example, the controller 180 generates the vibration or outputs the alert notification such as when one portion of the display unit 151 emits light.

Referring to FIGS. 10D(a) to 10D(d), a method of inputting data according to the selected time using the second functional hand 524b. The method of inputting the data is substantially the same as the method described referring to FIGS. 5A(a) to 5A(d). Therefore, substantially the same constituent elements are given the same reference numerals, and a redundant description is omitted.

Referring FIGS. 5A(a) to 5A(d) and 10D(a) to 10D(d), based on the touch input applied to the second functional hand 524b, the controller 180 selects the time. Based on the touch input applied to the first functional hand 524a, the controller 180 outputs the second functional hand 524b. Based on the touch input applied to the second functional hand 524b, the controller 180 assigns the time.

Based on the touch input applied to the second functional hand 524b, on the display unit 151, the alert display portion 541 is formed adjacent to at least one, among the numbers, along a region that the second functional hand 524b points to. When the touch input applied to the second functional hand 524b is released, the controller 180 cancels the locking mode and displays the first control screen 610.

Referring to FIGS. 10E(a) to 10E(c), a method is described in which data corresponding to the time that is selected based on the touch input applied to the third functional hand 524c. The method is substantially the same as the method described referring to FIGS. 6A(a) to 6E(c). Therefore, substantially the same constituent elements are given the same reference numerals, and a redundant description is omitted.

Based on the touch input applied to the third functional hand 524c that is formed with the user's touch input, the controller 180 outputs the alert display portion 541. In addition, if based on the touch input, the third functional hand 524c moves in a manner that points to the number in the number group 510, which corresponds to the time of the data stored in the memory 160, the controller 180 outputs the alert notification. For example, the controller 180 generates the vibration in the mobile terminal 180.

One or more, among items of data that include the time that is selected with the third functional hand 524c, are output to the display unit 151. In addition, the controller 180 cancels the locking mode. Then, based on the touch input applied to the display unit 151, the controller 180 displays the screen information including the data is output or the execution screen of an application corresponding to the data is output.

In addition, the controller 180 displays the third functional hand as continuously output also after the touch input applied to the third functional hand 524c is released. In this instance, based on the touch input that is additionally applied to the third functional hand 524c, the controller 180 re-selects the selected time. That is, the third functional hand 524c is displayed along with the number group 510 before the switching to the different screen information takes place, and the user can apply the touch input additionally to the third functional hand 524c.

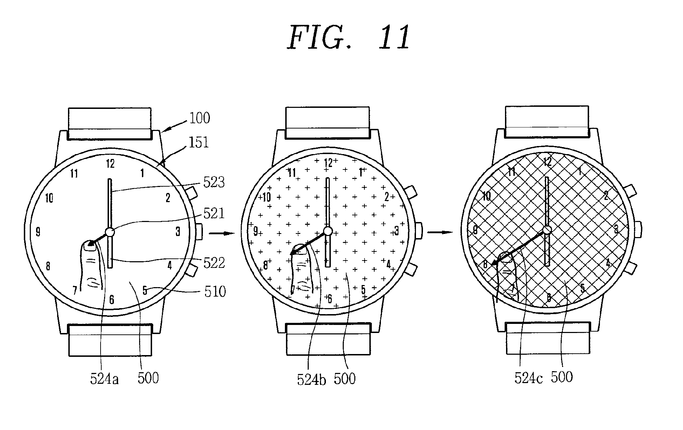

Next, FIG. 11 is a diagram illustrating a method of displaying a mode switch according to the functional hand. Referring to FIG. 11, if the first, second, and third functional hands 524a, 534b, and 524c that are different in length are formed with the user's touch input, the controller 180 activates different modes that correspond to the first, second, and third functional hands 524a, 524b, and 524c, respectively.

The locking mode that differs in color is output to the display unit 151. That is, the display unit 151 is controlled so light of different colors corresponding to the functional hands is emitted. Different types of vibration may be generated or the number group may be output in a manner that differs in shape. Accordingly, even though the functional hand is formed so it is relatively small in length, the user can distinguish between the first, second, and third functional hands 524a, 524b, and 524c.

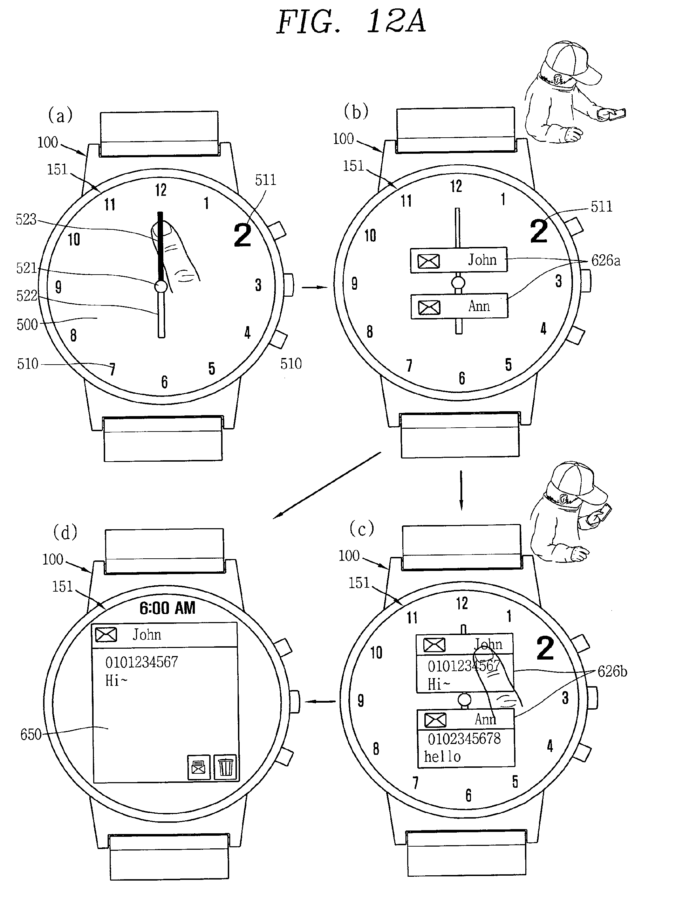

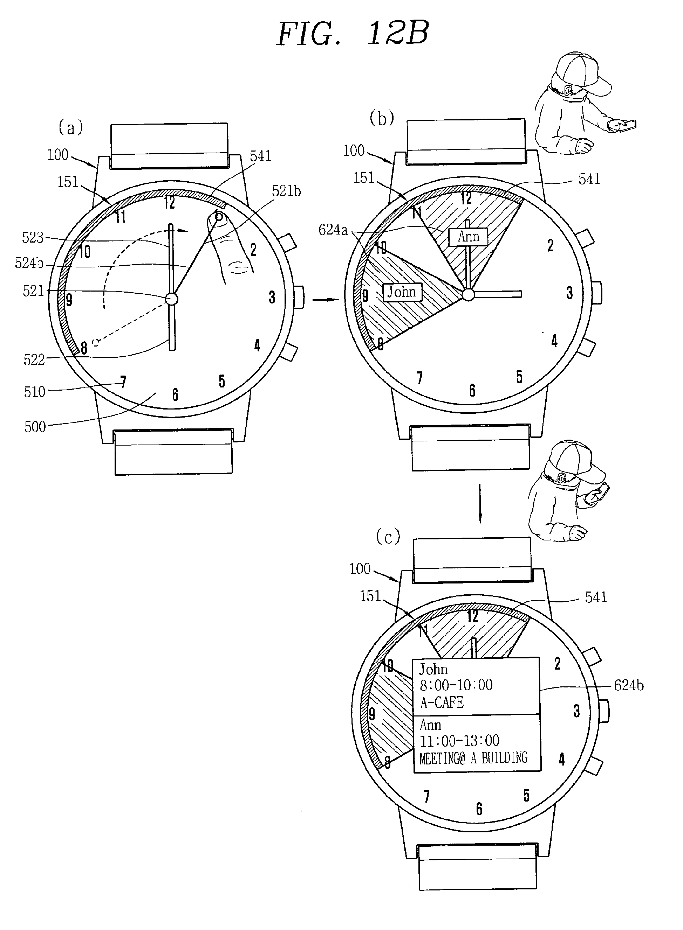

FIGS. 12A and 12B are diagrams illustrating a method of outputting different pieces of screen information using a proximity sensor. Here, the proximity sensor is formed adjacent to the display unit 151, and senses whether or not the user and the display unit 151 are positioned close to each other. For example, if the user's face is positioned close to the display unit 151 within a predetermined distance or below in order to check visual data output to the display unit 151, the proximity sensor senses this.

Referring to FIGS. 12A(a) to 12A(d), a method of outputting one or more piece of information on the received event according to the extent of the proximity to the user's face. In particular, referring to FIGS. 12A(a) and 12A(b), the received event is displayed on the display unit 151, using the number group 510 and the minute hand 523. Based on the touch input applied to the minute hand 523, the controller 180 displays summary information 626a on the event.

For example, if two messages are received in the mobile terminal, based on the touch input, the controller 180 displays a name of a sender of the message. However, the summary information is not limited to this, and pieces of information included in the summary information 626a are formed in a manner that differs according to the received event.

Referring FIGS. 12A(b) and 12A(c), the sensing unit senses that the face of the user is positioned close to the display unit 151 to within the predetermined distance. According to the sensing of the position of the user, the controller 180 displays detailed information 626b on the event.

The detailed information includes more event-related information than the summary information 626a. For example, the detailed information 626b includes a transmission number of the text message, contents of the message, and the like. However, the detailed information 626b is formed so it does not include the screen information for controlling an application corresponding to the message. For example, the detailed information 626b may not include a graphic image for responding to the message, editing, and the like.

Referring to FIGS. 12A(c) and 12A(d), based on the touch input applied to the detailed information 626b, the locking screen including the detailed information 262b is switched to the screen information 650 corresponding to the event on the display unit 151. That is, based on the sensing by the proximity sensor, the controller 180 provides the summary information or the detailed information relating to the event, and with the touch input applied to the summary information or the detailed information, executes the application.

Referring to FIGS. 12A(b) and 12A(d), when the summary information 626a is output, the sensing unit detects that the user is positioned close to the display unit 151, the controller 180 displays the screen information 650 on the corresponding application. That is, if the user looks at the display unit 151 at a short distance from the display unit 151 in order to operate the mobile terminal through the display unit that is relatively small in size, the mobile terminal immediately executes an application and provides the screen information. Alternatively, based on the touch input applied to the summary information 626a, the controller 180 executes the corresponding application, and displays the execution screen 650.

Further, according to one embodiment, when the alert notification that alerts the user to the received event is displayed on the number group 510, it is sensed that the user is close to the display unit 151, the controller 180 displays at least one or more piece of information on the event are output.

Referring to FIGS. 12B(a) to 12B(c), based on the second control hand 524b, the controller 180 sets the time and displays data corresponding to the time. When the touch input applied to the second control hand 524b, the controller 180 displays the summary information 624a on the data. The summary information 624a is displayed on a region that results from dividing the display unit 151 in a manner that points to the numbers in the number group 510, which correspond to the data. For example, the summary information 624a includes a title, a date, a keyword and the like of the data.

When the proximity sensor senses that the user is close to the display unit 151, the controller 180 displays the detailed information 624b included in the data. The detailed information 624b includes schedule information included in the data and the detailed information 624b includes the screen information for editing the data that is included. Accordingly, the user can automatically check the detailed information included in the data by looking at the display unit 151 at a short distance from the display unit 151.

The foregoing embodiments and advantages are merely and are not to be considered as limiting the present invention. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the embodiments described herein may be combined in various ways to obtain additional and/or alternative embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a main body configured to be worn on a wrist;
a display unit configured to display a lock screen indicating a locking mode of the mobile terminal, said lock screen including a clock having a minute hand and an hour hand connected at a central control point and having time identifications indicating a time of day surrounding the central control point; and
a controller configured to:
receive a touch input on the central control point and at least first and second time identifications to set a range of time,
unlock the mobile terminal based on the received touch input, and
display information corresponding to the set range of time.

2. The mobile terminal of claim 1, wherein the touch input includes a first touch and drag from the central control point toward the first time identification and a second touch and drag from the first time identification to the second time identification.

3. The mobile terminal of claim 2, wherein the controller is further configured to:
display a first control hand based on the first touch and drag with a first distance, and
rotate the first control hand based on the second touch and drag.

4. The mobile terminal of claim 3, wherein the controller is further configured to:
display a guide line surrounding the central control point based on a touching of the central control point for guiding a length of the first control hand, and
wherein the second touch and drag follows along the guide line.

5. The mobile terminal of claim 3, wherein the controller is further configured to:
display a second control hand based on the first touch and drag with a second distance different than the first distance,
rotate the second control hand based on the second touch and drag, and
display stored information for the set range of time that is different than the information displayed for the first control hand.

6. The mobile terminal of claim 5, wherein the displayed stored information includes multiple divisional images corresponding to multiple data have different time information within the set range of time.

7. The mobile terminal of claim 6, wherein the controller is further configured to distinguish the multiple divisional images from each other based on an importance of the multiple data.

8. The mobile terminal of claim 4, further comprising:
a sensing unit mounted in the main body and configured to sense a distance between the user's face and the main body,
wherein the controller is further configured to output more detailed information corresponding to the set range of time when the user's face is moved closer to the main body.

9. The mobile terminal of claim 5, wherein when the touch input applied to the second control hand is released, the controller is further configured to execute the application an application for recording data corresponding to the set range of time.

10. The mobile terminal of claim 5, wherein the displayed information includes a date input window for inputting a date, and
wherein the controller is further configured to search a memory for stored data including the input date and a time selected by the second control hand.

11. The mobile terminal of claim 5, wherein the controller is further configured to change a corresponding time identification to indicate a morning or afternoon time as the first or second control hand passes the corresponding time identification.

12. The mobile terminal of claim 5, wherein the controller is further configured to output an alert notification indicating whether the first or second control hand is being displayed.

13. The mobile terminal of any one of claims 1 to 12, wherein the controller is further configured to:
displaying a functional hand on the lock screen connected at the central control point and having a first length, and
perform a first function of setting the range of time based on a touch and drag input of the functional hand
change the first length of the functional hand into a second length based on a continuous touch input applied to an end portion of the functional hand, and
perform a second function different than the first function upon release of the continuous touch input.

14. The mobile terminal of claim 1, wherein the controller is further configured to:
match at least one application to at least one time identification,
receive a touch input in a region close to the time identification matched with the at least one application, and
unlock the mobile terminal and perform the matched application.

15. A method of controlling a mobile terminal including a main body configured to be worn on a wrist, the method comprising:
displaying, via a display unit of the mobile terminal, a lock screen indicating a locking mode of the mobile terminal, said lock screen including a clock having a minute hand and an hour hand connected at a central control point and having time identifications indicating a time of day surrounding the central control point;
receiving, via a controller of the mobile terminal, a touch input on the central control point and at least first and second time identifications to set a range of time;
and
unlocking, via the controller, the mobile terminal based on the received touch input; and
displaying information corresponding to the set range of time on the display unit.
